# EUROPEAN PATENT SPECIFICATION

(11) **EP 3 673 606 B1**
(45) Date of publication and mention of the grant of the patent: **06.09.2023**
(21) Application number: 18860531.5
(22) Date of filing: 01.10.2018
(51) Int. Cl.: H04L 5/00

(54) **A METHOD AND APPARATUS FOR TRANSMITTING REFERENCE SIGNAL IN WIRELESS COMMUNICATION SYSTEM**
VERFAHREN UND VORRICHTUNG ZUR ÜBERTRAGUNG VON REFERENZSIGNALEN IN EINEM DRAHTLOSKOMMUNIKATIONSSYSTEM
PROCÉDÉ ET APPAREIL PERMETTANT DE TRANSMETTRE UN SIGNAL DE RÉFÉRENCE DANS UN SYSTÈME DE COMMUNICATION SANS FIL

(30) Priority: 29.09.2017 KR 20170127953; 14.11.2017 KR 20170151594
(43) Date of publication of application: 01.07.2020
(73) Proprietor: Samsung Electronics Co., Ltd., Suwon-si, Gyeonggi-do 16677 (KR)
(72) Inventor: YOO, Hyunil, Suwon-si, Gyeonggi-do 16677 (KR); KIM, Taeyoung, Suwon-si, Gyeonggi-do 16677 (KR); SHIN, Cheolkyu, Suwon-si, Gyeonggi-do 16677 (KR); NAM, Hyungju, Suwon-si, Gyeonggi-do 16677 (KR); NOH, Jeehwan, Suwon-si, Gyeonggi-do 16677 (KR)
(74) Representative: Gulde & Partner
(86) International application number: PCT/KR2018/011653
(87) International publication number: WO 2019/066625

(56) References cited:
- WO-A1-2016/107286
- US-A1- 2011 090 862
- US-A1- 2012 044 906
- US-A1- 2012 113 967
- US-A1- 2014 056 278
- "3rd Generation Partnership Project; Technical Specification Group Radio Access Network; Evolved Universal Terrestrial Radio Access (E-UTRA); Physical channels and modulation (Release 14)", 3GPP STANDARD ; TECHNICAL SPECIFICATION ; 3GPP TS 36.211, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. V14.4.0, 26 September 2017 (2017-09-26), pages 8-75, XP051337329, [retrieved on 2017-09-26]
- HUAWEI et al.: "SRS transmission for eLAA", R1-160301, 3GPP TSG RAN WG1 Meeting #84, 6 February 2016 (2016-02-06), XP051053641, St. Julian' s, Malta
- 3GPP: "3GPP; TSG RAN; Evolved Universal Terrestrial Radio Access (E-UTRA); Physical layer procedures (Release 14)", 3GPP TS 36.213 V14.4.0, 26 September 2017 (2017-09-26), XP051351395,

## Description

### [Technical Field]

The disclosure relates to reference signal transmission in a mobile communication system. More particularly, the disclosure relates to a transmission method using multiple antennas in a mobile communication system.

The disclosure further relates to reference signal transmission in a mobile communication system, and more particularly to a method and an apparatus for a user equipment (UE) to transmit a sounding reference signal (SRS) for channel state measurement.

### [Background Art]

In order to meet the demand for wireless data traffic that is on an increasing trend after commercialization of fourth generation (4G) communication systems, efforts have been made to develop improved fifth generation (5G) or pre-5G communication system. For this reason, the 5G or pre-5G communication system is also called a beyond 4G network communication system or a post long-term evolution (LTE) system. In order to achieve high data rate, implementation of a 5G communication system in an ultrahigh frequency (mmWave) band (e.g., like 60 GHz band) has been considered. In order to mitigate a path loss of radio waves and to increase a transfer distance of the radio waves in the ultrahigh frequency band, technologies of beamforming, massive multiple input multiple output (MIMO), full dimension MIMO (FD-MIMO), array antennas, analog beamforming, and large scale antennas for the 5G communication system have been discussed. Further, for system network improvement in the 5G communication system, technology developments have been made for an evolved small cell, advanced small cell, cloud radio access network (cloud RAN), ultra-dense network, device to device communication (D2D), wireless backhaul, moving network, cooperative communication, coordinated multi-points (CoMP), and reception interference cancellation. In addition, in the 5G system, hybrid frequency shift keying (FSK) and quadrature amplitude modulation (QAM) modulation (FQAM) and sliding window superposition coding (SWSC), which correspond to advanced coding modulation (ACM) systems, and filter bank multicarrier (FBMC), non-orthogonal multiple access (NOMA), and sparse code multiple access (SCMA), which correspond to advanced connection technologies, have been developed.

On the other hand, The Internet, which is a human centered connectivity network where humans generate and consume information, is now evolving to the Internet of Things (IoT) where distributed entities, such as things, exchange and process information without human intervention. The Internet of Everything (IoE), which is a combination of the IoT technology and the Big Data processing technology through connection with a cloud server, has emerged. As technology elements, such as "sensing technology", "wired/wireless communication and network infrastructure", "service interface technology", and "Security technology" have been demanded for IoT implementation, a sensor network, a Machine-to-Machine (M2M) communication, Machine Type Communication (MTC), and so forth have been recently researched. Such an IoT environment may provide intelligent Internet technology services that create a new value to human life by collecting and analyzing data generated among connected things. IoT may be applied to a variety of fields including smart home, smart building, smart city, smart car or connected cars, smart grid, health care, smart appliances and advanced medical services through convergence and combination between existing Information Technology (IT) and various industrial applications.

Accordingly, various attempts have been made to apply the 5G communication system to IoT networks. For example, technologies of sensor network, machine to machine (M2M) communication, and machine type communication (MTC) have been implemented by techniques for beam-forming, MIMO, and array antennas, which correspond to the 5G communication technology. As the big data processing technology as described above, application of a cloud radio access network (cloud RAN) would be an example of convergence between the 5G technology and the IoT technology. In similar regards, publication "3rd Generation Partnership Project; Technical Specification Group Radio Access Network; Evolved Universal Terrestrial Radio Access (E-UTRA); Physical channels and modulation (Release 14)", 3GPP TS 36.211, vol. RAN WG1, no. V14.4.0, 26-09-2017 deals with mapping of physical resources in souding reference signal (SRS) procedures, particularly wherein a cell-specific parameter and UE-specific parameter are provided by higher layers, and publication US 2012/044906 A1 provides methods for UE-specific SRS, based on SRS parameters communicated from the base station to the UE.

On the other hand, since 5G communication is operated using the bandwidth part concept, it is necessary to design a new SRS bandwidth for the 5G communication.

The above information is presented as background information only to assist with an understanding of the disclosure. No determination has been made, and no assertion is made, as to whether any of the above might be applicable as prior art with regard to the disclosure.

### [Disclosure of Invention]

### [Technical Problem]

Since 5G communication is operated using the bandwidth part concept, it is necessary to design a new SRS bandwidth for the 5G communication.

The above information is presented as background information only to assist with an understanding of the disclosure. No determination has been made, and no assertion is made, as to whether any of the above might be applicable as prior art with regard to the disclosure.

### [Solution to Problem]

Aspects of the disclosure are to address at least the above-mentioned problems and/or disadvantages and to provide at least the advantages described below. Accordingly, an aspect of the disclosure is to provide a method using a reference signal.

The invention is set out in the appended set of claims, wherein the figures and respective description relate to advantageous embodiments thereof. In accordance with another aspect of the disclosure, a user equipment (UE) in a wireless communication system is provided. The UE includes a transceiver and at least one processor operably connected to the transceiver and configured according to the method of a user equipment (UE) in a wireless communication system brought above.

In accordance with another aspect of the disclosure, a base station in a wireless communication system is provided. The base station includes a transceiver, and at least one processor operably connected to the transceiver and configured according to the method of a base station in a wireless communication system brought above.

### [Advantageous Effects of Invention]

Additional aspects and advantages of the present invention will be partially appreciated and become apparent from the descriptions below, or will be well learned from the practices of the present invention.
According to the aspects of the disclosure, it is possible to provide a method and an apparatus using a reference signal.
Further, according to the aspects of the disclosure, it is possible to allocate and transmit an SRS resource to in a UE-specific manner in case of transmitting the SRS in consideration of a bandwidth part. Further, according to the aspects of the disclosure, unlike LTE, it is possible to consider a UE bandwidth and a bandwidth in a bandwidth part without considering the system bandwidth.
Further, according to the aspects of the disclosure, the UE can receive the SRS bandwidth (BW) and the UE SRS BW from the base station through UE-specific signaling, receive the frequency position for transmitting the SRS, and transmit the SRS to the base station.
Further, according to the aspects of the disclosure, it is possible to determine the frequency position for transmitting the SRS based on frequency information having an absolute value based on the system bandwidth.
Other aspects, advantages, and salient features of the disclosure will become apparent to those skilled in the art from the following detailed description, which, taken in conjunction with the annexed drawings, discloses various embodiments of the disclosure.

### [Brief Description of Drawings]

The above and other aspects, features, and advantages of certain embodiments of the disclosure will be more apparent from the following description taken in conjunction with the accompanying drawings, in which:
FIGS. 1a and 1b are diagrams explaining a method for configuring a cell-specific sounding reference signal (SRS) parameter for SRS frequency resource configuration and an SRS bandwidth through SRS bandwidth configuration (C_{SRS}) in long-term evolution (LTE) according to various embodiments of the disclosure;
FIG. 2 is a diagram illustrating an SRS bandwidth table according to an embodiment of the disclosure;
FIG. 3 is a diagram explaining a problem caused by quantized SRS bandwidth support according to an embodiment of the disclosure;
FIG. 4 is a diagram illustrating an operation of a base station according to an embodiment of the disclosure;
FIG. 5 is a diagram illustrating an operation of a user equipment (UE) according to an embodiment of the disclosure;
FIG. 6 is a diagram illustrating an operation of a base station for a second method for adjusting a frequency position of an SRS according to an embodiment of the disclosure;
FIG. 7 is a diagram illustrating an operation of a UE for a second method for adjusting a frequency position of an SRS according to an embodiment of the disclosure;
FIG. 8 is a diagram illustrating the structure of a base station according to an embodiment of the disclosure;
FIG. 9 is a diagram illustrating the structure of a UE according to an embodiment of the disclosure;
FIGS. 10a and 10b are diagrams illustrating another embodiment in which an SRS bandwidth is extended up to 272 resource blocks (RB) based on tables illustrated in FIGS. 1a and 1b according to various embodiments of the disclosure; and
FIGS. 11 and 12 are diagrams illustrating processes of a base station and a UE to allocate an SRS using the table illustrated in FIGS. 10a and 10b and to transmit and receive the allocated SRS according to various embodiments of the disclosure.

Throughout the drawings, it should be noted that like reference numbers are used to depict the same or similar elements, features, and structures.

### [Mode for the Invention]

Aspects of the disclosure are to address at least the above-mentioned problems and/or disadvantages and to provide at least the advantages described below. Accordingly, an aspect of the disclosure is to provide a method using a reference signal.

Another aspect of the disclosure is to provide a method for transmitting a user equipment (UE)-specific sounding reference signal (SRS) in consideration of a UE bandwidth part.

Another aspect of the disclosure is to provide a method for defining an SRS bandwidth for supporting the SRS bandwidth extended to 272 RB.

Another aspect of the disclosure is to provide a method for adding an SRS bandwidth to a radio resource control (RRC) message for configuration for each UE in consideration of a UE-supportable bandwidth.

Another aspect of the disclosure is to provide a method for configuring a reference for a frequency position of an SRS using at least one of a UE bandwidth part (BWP) reference and a system bandwidth reference.

Additional aspects will be set forth in part in the description which follows and, in part, will be apparent from the description, or may be learned by practice of the presented embodiments.

In accordance with an aspect of the disclosure, a method of a user equipment (UE) in a wireless communication system is provided. The method includes receiving, from a base station, a first parameter and a second parameter associated with a sound reference signal (SRS) by higher layer signaling, identifying a bandwidth for the SRS based on the first parameter and the second parameter, and transmitting, to the base station, the SRS based on the identified bandwidth for the SRS, wherein the first parameter and the second parameter comprise UE-specific parameters.

The method further comprises receiving, from the base station, offset information by higher layer signaling, the offset information being based on a common resource block, identifying a starting point for the bandwidth based on the offset information, wherein the SRS is transmitted based on the bandwidth and the identified starting point.

The bandwidth for the SRS includes up to 272 resource blocks (RB).

A first value of the first parameter indicates a first bandwidth set not including 272 resource blocks (RB) and a second value of the first parameter indicates a second bandwidth set including 272 RB in a predetermined table, and wherein the first bandwidth set does not include a part of the second bandwidth set less than 272 RB.

The predetermined table is comprises:

| | B_{SRS} = 0 | | B_{SRS} = 1 | | B_{SRS} = 2 | | B_{SRS} = 3 | |
|---|---|---|---|---|---|---|---|---|
| C_{SRS} | m_{SRS,0} | N₀ | m_{SRS,1} | N₁ | m_{SRS, 2} | N₂ | m_{SRS,3} | N₃ |
| 0 | 4 | 1 | 4 | 1 | 4 | 1 | 4 | 1 |
| 1 | 8 | 1 | 4 | 2 | 4 | 1 | 4 | 1 |
| 2 | 12 | 1 | 4 | 3 | 4 | 1 | 4 | 1 |
| 3 | 16 | 1 | 4 | 4 | 4 | 1 | 4 | I |
| 4 | 16 | 1 | 8 | 2 | 4 | 2 | 4 | 1 |
| 5 | 20 | 1 | 4 | 5 | 4 | 1 | 4 | 1 |
| 6 | 24 | 1 | 4 | 6 | 4 | 1 | 4 | 1 |
| 7 | 24 | 1 | 12 | 2 | 4 | 3 | 4 | 1 |
| 8 | 28 | 1 | 4 | 7 | 4 | 1 | 4 | 1 |
| 9 | 32 | 1 | 16 | 2 | 8 | 2 | 4 | 2 |
| 10 | 36 | 1 | 12 | 3 | 4 | a3 | 4 | 1 |
| 11 | 40 | 1 | 20 | 2 | 4 | 5 | 4 | 1 |
| 12 | 48 | 1 | 16 | 3 | 8 | 2 | 4 | 2 |
| 13 | 48 | 1 | 24 | 2 | 12 | 2 | 4 | 3 |
| 14 | 52 | 1 | 4 | 13 | 4 | 1 | 4 | 1 |
| 15 | 56 | 1 | 28 | 2 | 4 | 7 | 4 | 1 |
| 16 | 60 | 1 | 20 | 3 | 4 | 5 | 4 | 1 |
| 17 | 64 | 1 | 32 | 2 | 16 | 2 | 4 | 4 |
| 18 | 72 | 1 | 24 | 3 | 12 | 2 | 4 | 3 |
| 19 | 72 | 1 | 36 | 2 | 12 | 3 | 4 | 3 |
| 20 | 76 | 1 | 4 | 19 | 4 | 1 | 4 | 1 |
| 21 | 80 | 1 | 40 | 2 | 20 | 2 | 4 | 5 |
| 22 | 88 | 1 | 44 | 2 | 4 | 11 | 4 | 1 |
| 23 | 96 | 1 | 32 | 3 | 16 | 2 | 4 | 4 |
| 24 | 96 | 1 | 48 | 2 | 24 | 2 | 4 | 6 |
| 25 | 104 | 1 | 52 | 2 | 4 | 13 | 4 | 1 |
| 26 | 112 | 1 | 56 | 2 | 28 | 2 | 4 | 7 |
| 27 | 120 | 1 | 60 | 2 | 20 | 3 | 4 | 5 |
| 28 | 120 | 1 | 40 | 3 | 8 | 5 | 4 | 2 |
| 29 | 120 | 1 | 24 | 5 | 12 | 2 | 4 | 3 |
| 30 | 128 | 1 | 64 | 2 | 32 | 2 | 4 | 8 |
| 31 | 128 | 1 | 64 | 2 | 16 | 4 | 4 | 4 |
| 32 | 128 | 1 | 16 | 8 | 8 | 2 | 4 | 2 |
| 33 | 132 | 1 | 44 | 3 | 4 | 11 | 4 | 1 |
| 34 | 136 | 1 | 68 | 2 | 4 | 17 | 4 | 1 |
| 35 | 144 | 1 | 72 | 2 | 36 | 2 | 4 | 9 |
| 36 | 144 | 1 | 48 | 3 | 24 | 2 | 12 | 2 |
| 37 | 144 | 1 | 48 | 3 | 16 | 3 | 4 | 4 |
| 38 | 144 | 1 | 16 | 9 | 8 | 2 | 4 | 2 |
| 39 | 152 | 1 | 76 | 2 | 4 | 19 | 4 | 1 |
| 40 | 160 | 1 | 80 | 2 | 40 | 2 | 4 | 10 |
| 41 | 160 | 1 | 80 | 2 | 20 | 4 | 4 | 5 |
| 42 | 160 | 1 | 32 | 5 | 16 | 2 | 4 | 4 |
| 43 | 168 | 1 | 84 | 2 | 28 | 3 | 4 | 7 |
| 44 | 176 | 1 | 88 | 2 | 44 | 2 | 4 | 11 |
| 45 | 184 | 1 | 92 | 2 | 4 | 23 | 4 | 1 |
| 46 | 192 | 1 | 96 | 2 | 48 | 2 | 4 | 12 |
| 47 | 192 | 1 | 96 | 2 | 24 | 4 | 4 | 6 |
| 48 | 192 | 1 | 64 | 3 | 16 | 4 | 4 | 4 |
| 49 | 192 | 1 | 24 | 8 | 8 | 3 | 4 | 2 |
| 50 | 208 | 1 | 104 | 2 | 52 | 2 | 4 | 13 |
| 51 | 216 | 1 | 108 | 2 | 36 | 3 | 4 | 9 |
| 52 | 224 | 1 | 112 | 2 | 56 | 2 | 4 | 14 |
| 53 | 240 | 1 | 120 | 2 | 60 | 2 | 4 | 15 |
| 54 | 240 | 1 | 80 | 3 | 20 | 4 | 4 | 5 |
| 55 | 240 | 1 | 48 | 5 | 16 | 3 | 8 | 2 |
| 56 | 240 | 1 | 24 | 10 | 12 | 2 | 4 | 3 |
| 57 | 256 | 1 | 128 | 2 | 64 | 2 | 4 | 16 |
| 58 | 256 | 1 | 128 | 2 | 32 | 4 | 4 | 8 |
| 59 | 256 | 1 | 16 | 16 | 8 | 2 | 4 | 2 |
| 60 | 264 | 1 | 132 | 2 | 44 | 3 | 4 | 11 |
| 61 | 272 | 1 | 136 | 2 | 68 | 2 | 4 | 17 |
| 62 | 272 | 1 | 68 | 4 | 4 | 17 | 4 | 1 |
| 63 | 272 | 1 | 16 | 17 | 8 | 2 | 4 | 2 |

In accordance with another aspect of the disclosure, a method of a base station in a wireless communication system is provided. The method includes transmitting, to a user equipment (UE), a first parameter and a second parameter associated with a sound reference signal (SRS) by higher layer signaling; and receiving, from the UE, the SRS based on a bandwidth for the SRS, the bandwidth being identified based on the first parameter and the second parameter, wherein the first parameter and the second parameter comprise UE-specific parameters.

The method further comprises transmitting, to the UE, offset information by higher layer signaling, the offset information being based on a common resource block, wherein the SRS is received based on the bandwidth and a starting point for the bandwidth, the starting point being identified based on the offset information.

The bandwidth for the SRS includes up to 272 resource blocks (RB).

A first value of the first parameter indicates a first bandwidth set not including 272 resource blocks (RB) and a second value of the first parameter indicates a second bandwidth set including 272 RB in a predetermined table, and wherein the first bandwidth set does not include a part of the second bandwidth set less than 272 RB.

The predetermined table is comprises:

| | B_{SRS} = 0 | | B_{SRS} = 1 | | B_{SRS} = 2 | | B_{SRS} = 3 | |
|---|---|---|---|---|---|---|---|---|
| C_{SRS} | m_{SRS, 0} | N₀ | m_{SRS, 1} | N₁ | m_{SRS, 2} | N₂ | m_{SRS, 3} | N₃ |
| 0 | 4 | 1 | 4 | 1 | 4 | 1 | 4 | 1 |
| 1 | 8 | 1 | 4 | 2 | 4 | 1 | 4 | 1 |
| 2 | 12 | 1 | 4 | 3 | 4 | 1 | 4 | 1 |
| 3 | 16 | 1 | 4 | 4 | 4 | 1 | 4 | 1 |
| 4 | 16 | 1 | 8 | 2 | 4 | 2 | 4 | 1 |
| 5 | 20 | 1 | 4 | 5 | 4 | 1 | 4 | 1 |
| 6 | 24 | 1 | 4 | 6 | 4 | 1 | 4 | 1 |
| 7 | 24 | 1 | 12 | 2 | 4 | 3 | 4 | 1 |
| 8 | 28 | 1 | 4 | 7 | 4 | 1 | 4 | 1 |
| 9 | 32 | 1 | 16 | 2 | 8 | 2 | 4 | 2 |
| 10 | 36 | 1 | 12 | 3 | 4 | 3 | 4 | 1 |
| 11 | 40 | 1 | 20 | 2 | 4 | 5 | 4 | 1 |
| 12 | 48 | 1 | 16 | 3 | 8 | 2 | 4 | 2 |
| 13 | 48 | 1 | 24 | 2 | 12 | 2 | 4 | 3 |
| 14 | 52 | 1 | 4 | 13 | 4 | 1 | 4 | I |
| 15 | 56 | 1 | 28 | 2 | 4 | 7 | 4 | 1 |
| 16 | 60 | 1 | 20 | 3 | 4 | 5 | 4 | 1 |
| 17 | 64 | 1 | 32 | 2 | 16 | 2 | 4 | 4 |
| 18 | 72 | 1 | 24 | 3 | 12 | 2 | 4 | 3 |
| 19 | 72 | 1 | 36 | 2 | 12 | 3 | 4 | 3 |
| 20 | 76 | 1 | 1 | 19 | 4 | 1 | 4 | 1 |
| 21 | 80 | 1 | 40 | 2 | 20 | 2 | 4 | 5 |
| 22 | 88 | 1 | 44 | 2 | 4 | 11 | 4 | 1 |
| 23 | 96 | 1 | 32 | 3 | 16 | 2 | 4 | 4 |
| 24 | 96 | 1 | 48 | 2 | 24 | 2 | 4 | 6 |
| 25 | 104 | 1 | 52 | 2 | 4 | 13 | 4 | I |
| 26 | 112 | 1 | 56 | 2 | 28 | 2 | 4 | 7 |
| 27 | 120 | 1 | 60 | 2 | 20 | 3 | 4 | 5 |
| 28 | 120 | 1 | 40 | 3 | 8 | 5 | 4 | 2 |
| 29 | 120 | 1 | 24 | 5 | 12 | 2 | 4 | 3 |
| 30 | 128 | 1 | 64 | 2 | 32 | 2 | 4 | 8 |
| 31 | 128 | 1 | 64 | 2 | 16 | 4 | 4 | 4 |
| 32 | 128 | 1 | 16 | 8 | 8 | 2 | 4 | 2 |
| 33 | 132 | 1 | 44 | 3 | 4 | 11 | 4 | 1 |
| 34 | 136 | 1 | 68 | 2 | 4 | 17 | 4 | 1 |
| 35 | 144 | 1 | 72 | 2 | 36 | 2 | 4 | 9 |
| 36 | 144 | 1 | 48 | 3 | 24 | 2 | 12 | 2 |
| 37 | 144 | 1 | 48 | 3 | 16 | 3 | 4 | 4 |
| 38 | 144 | 1 | 16 | 9 | 8 | 2 | 4 | 2 |
| 39 | 152 | 1 | 76 | 2 | 4 | 19 | 4 | 1 |
| 40 | 160 | 1 | 80 | 2 | 40 | 2 | 4 | 10 |
| 41 | 160 | 1 | 80 | 2 | 20 | 4 | 4 | 5 |
| 42 | 160 | 1 | 32 | 5 | 16 | 2 | 4 | 4 |
| 43 | 168 | 1 | 84 | 2 | 28 | 3 | 4 | 7 |
| 44 | 176 | 1 | 88 | 2 | 44 | 2 | 4 | 11 |
| 45 | 184 | 1 | 92 | 2 | 4 | 23 | 4 | 1 |
| 46 | 192 | 1 | 96 | 2 | 48 | 2 | 4 | 12 |
| 47 | 192 | 1 | 96 | 2 | 24 | 4 | 4 | 6 |
| 48 | 192 | 1 | 64 | 3 | 16 | 4 | 4 | 4 |
| 49 | 192 | 1 | 24 | 8 | 8 | 3 | 4 | 2 |
| 50 | 208 | 1 | 104 | 2 | 52 | 2 | 4 | 13 |
| 51 | 216 | 1 | 108 | 2 | 36 | 3 | 4 | 9 |
| 52 | 224 | 1 | 112 | 2 | 56 | 2 | 4 | 14 |
| 53 | 240 | 1 | 120 | 2 | 60 | 2 | 4 | 15 |
| 54 | 240 | 1 | 80 | 3 | 20 | 4 | 4 | 5 |
| 55 | 240 | 1 | 48 | 5 | 16 | 3 | 8 | 2 |
| 56 | 240 | 1 | 24 | 10 | 12 | 2 | 4 | 3 |
| 57 | 256 | 1 | 128 | 2 | 64 | 2 | 4 | 16 |
| 58 | 256 | 1 | 128 | 2 | 32 | 4 | 4 | 8 |
| 59 | 256 | 1 | 16 | 16 | 8 | 2 | 4 | 2 |
| 60 | 264 | 1 | 132 | 2 | 44 | 3 | 4 | 11 |
| 61 | 272 | 1 | 136 | 2 | 68 | 2 | 4 | 17 |
| 62 | 272 | 1 | 68 | 4 | 4 | 17 | 4 | 1 |
| 63 | 272 | 1 | 16 | 17 | 8 | 2 | 4 | 2 |

In accordance with another aspect of the disclosure, a user equipment (UE) in a wireless communication system is provided. The UE includes a transceiver and at least one processor operably connected to the transceiver and configured to control the transceiver to receive, from a base station, a first parameter and a second parameter associated with a sound reference signal (SRS) by higher layer signaling, identify a bandwidth for the SRS based on the first parameter and the second parameter, and control the transceiver to transmit, to the base station, the SRS based on the identified bandwidth for the SRS, wherein the first parameter and the second parameter comprise UE-specific parameters.

The at least one processor is further configured to control the transceiver to receive, from the base station, offset information by higher layer signaling, the offset information being based on a common resource block, and identify a starting point for the bandwidth based on the offset information, and wherein the SRS is transmitted based on the bandwidth and the identified starting point.

The bandwidth for the SRS includes up to 272 resource blocks (RB).

A first value of the first parameter indicates a first bandwidth set not including 272 resource blocks (RB) and a second value of the first parameter indicates a second bandwidth set including 272 RB in a predetermined table, and wherein the first bandwidth set does not include a part of the second bandwidth set less than 272 RB.

The predetermined table is comprises:

| | B_{SRS} = 0 | | B_{SRS} = 1 | | B_{SRS} = 2 | | B_{SRS} = 3 | |
|---|---|---|---|---|---|---|---|---|
| C_{SRS} | m_{SRS,0} | N₀ | m_{SRS,1} | N₁ | m_{SRS,2} | N₂ | m_{SRS,3} | N₃ |
| 0 | 4 | 1 | 4 | 1 | 4 | 1 | 4 | 1 |
| 1 | 8 | 1 | 4 | 2 | 4 | 1 | 4 | 1 |
| 2 | 12 | 1 | 4 | 3 | 4 | 1 | 4 | 1 |
| 3 | 16 | 1 | 4 | 4 | 4 | 1 | 4 | 1 |
| 4 | 16 | 1 | 8 | 2 | 4 | 2 | 4 | 1 |
| 5 | 20 | 1 | 4 | 5 | 4 | 1 | 4 | 1 |
| 6 | 24 | 1 | 4 | 6 | 4 | 1 | 4 | 1 |
| 7 | 24 | 1 | 12 | 2 | 4 | 3 | 4 | 1 |
| 8 | 28 | 1 | 4 | 7 | 4 | 1 | 4 | 1 |
| 9 | 32 | 1 | 16 | 2 | 8 | 2 | 4 | 2 |
| 10 | 36 | 1 | 12 | 3 | 4 | 3 | 4 | 1 |
| 11 | 40 | 1 | 20 | 2 | 4 | 5 | 4 | 1 |
| 12 | 48 | 1 | 16 | 3 | 8 | 2 | 4 | 2 |
| 13 | 48 | 1 | 24 | 2 | 12 | 2 | 4 | 3 |
| 14 | 52 | 1 | 4 | 13 | 4 | 1 | 4 | 1 |
| 15 | 56 | 1 | 28 | 2 | 4 | 7 | 4 | 1 |
| 16 | 60 | 1 | 20 | 3 | 4 | 5 | 4 | 1 |
| 17 | 64 | 1 | 32 | 2 | 16 | 2 | 4 | 4 |
| 18 | 72 | 1 | 24 | 3 | 12 | 2 | 4 | 3 |
| 19 | 72 | 1 | 36 | 2 | 12 | 3 | 4 | 3 |
| 20 | 76 | 1 | 4 | 19 | 4 | 1 | 4 | 1 |
| 21 | 80 | 1 | 40 | 2 | 20 | 2 | 4 | 5 |
| 22 | 88 | 1 | 44 | 2 | 4 | 11 | 4 | 1 |
| 23 | 96 | 1 | 32 | 3 | 16 | 2 | 4 | 4 |
| 24 | 96 | 1 | 48 | 2 | 24 | 2 | 4 | 6 |
| 25 | 104 | 1 | 52 | 2 | 4 | 13 | 4 | 1 |
| 26 | 112 | 1 | 56 | 2 | 28 | 2 | 4 | 7 |
| 27 | 120 | 1 | 60 | 2 | 20 | 3 | 4 | 5 |
| 28 | 120 | 1 | 40 | 3 | 8 | 5 | 4 | 2 |
| 29 | 120 | 1 | 24 | 5 | 12 | 2 | 4 | 3 |
| 30 | 128 | 1 | 64 | 2 | 32 | 2 | 4 | 8 |
| 31 | 128 | 1 | 64 | 2 | 16 | 4 | 4 | 4 |
| 32 | 128 | 1 | 16 | 8 | 8 | 2 | 4 | 2 |
| 33 | 132 | 1 | 44 | 3 | 4 | 11 | 4 | 1 |
| 34 | 136 | 1 | 68 | 2 | 4 | 17 | 4 | 1 |
| 35 | 144 | 1 | 72 | 2 | 36 | 2 | 4 | 9 |
| 36 | 144 | 1 | 48 | 3 | 24 | 2 | 12 | 2 |
| 37 | 144 | 1 | 48 | 3 | 16 | 3 | 4 | 4 |
| 38 | 144 | 1 | 16 | 9 | 8 | 2 | 4 | 2 |
| 39 | 152 | 1 | 76 | 2 | 4 | 19 | 4 | 1 |
| 40 | 160 | 1 | 80 | 2 | 40 | 2 | 4 | 10 |
| 41 | 160 | 1 | 80 | 2 | 20 | 4 | 4 | 5 |
| 42 | 160 | 1 | 32 | 5 | 16 | 2 | 4 | 4 |
| 43 | 168 | 1 | 84 | 2 | 28 | 3 | 4 | 7 |
| 44 | 176 | 1 | 88 | 2 | 44 | 2 | 4 | 11 |
| 45 | 184 | 1 | 92 | 2 | 4 | 23 | 4 | 1 |
| 46 | 192 | 1 | 96 | 2 | 48 | 2 | 4 | 12 |
| 47 | 192 | 1 | 96 | 2 | 24 | 4 | 4 | 6 |
| 48 | 192 | 1 | 64 | 3 | 16 | 4 | 4 | 4 |
| 49 | 192 | 1 | 24 | 8 | 8 | 3 | 4 | 2 |
| 50 | 208 | 1 | 104 | 2 | 52 | 2 | 4 | 13 |
| 51 | 216 | 1 | 108 | 2 | 36 | 3 | 4 | 9 |
| 52 | 224 | 1 | 112 | 2 | 56 | 2 | 4 | 14 |
| 53 | 240 | 1 | 120 | 2 | 60 | 2 | 4 | 15 |
| 54 | 240 | 1 | 80 | 3 | 20 | 4 | 4 | 5 |
| 55 | 240 | 1 | 48 | 5 | 16 | 3 | 8 | 2 |
| 56 | 240 | 1 | 24 | 10 | 12 | 2 | 4 | 3 |
| 57 | 256 | 1 | 128 | 2 | 64 | 2 | 4 | 16 |
| 58 | 256 | 1 | 128 | 2 | 32 | 4 | 4 | 8 |
| 59 | 256 | 1 | 16 | 16 | 8 | 2 | 4 | 2 |
| 60 | 264 | 1 | 132 | 2 | 44 | 3 | 4 | 11 |
| 61 | 272 | 1 | 136 | 2 | 68 | 2 | 4 | 17 |
| 62 | 272 | 1 | 68 | 4 | 4 | 17 | 4 | 1 |
| 63 | 272 | 1 | 16 | 17 | 8 | 2 | 4 | 2 |

In accordance with another aspect of the disclosure, a base station in a wireless communication system is provided. The base station includes a transceiver, and at least one processor operably connected to the transceiver and configured to control the transceiver to transmit, to a user equipment (UE), a first parameter and a second parameter by higher layer signaling, and receive, from the UE, the sound reference signal (SRS) based on a bandwidth for the SRS, the bandwidth being identified based on the first parameter and the second parameter, wherein the first parameter and the second parameter comprise UE-specific parameters.

The at least one processor is further configured to control the transceiver to transmit, to the UE, offset information by higher layer signaling, the offset information being based on a common resource block, and wherein the SRS is received based on the bandwidth and a starting point for the bandwidth, the starting point being identified based on the offset information.

The bandwidth for the SRS includes up to 272 resource blocks (RB).

A first value of the first parameter indicates a first bandwidth set not including 272 resource blocks (RB) and a second value of the first parameter indicates a second bandwidth set including 272 RB in a predetermined table, and wherein the first bandwidth set does not include a part of the second bandwidth set less than 272 RB.

The predetermined table is comprises:

| | B_{SRS} = 0 | | B_{SRS} = 1 | | B_{SRS} = 2 | | B_{SRS} = 3 | |
|---|---|---|---|---|---|---|---|---|
| C_{SRS} | m_{SRS, 0} | N₀ | m_{SRS, 1} | N₁ | M_{SRS, 2} | N₂ | m_{SRS, 3} | N₃ |
| 0 | 4 | 1 | 4 | 1 | 4 | 1 | 4 | 1 |
| 1 | 8 | 1 | 4 | 2 | 4 | 1 | 4 | 1 |
| 2 | 12 | 1 | 4 | 3 | 4 | 1 | 4 | 1 |
| 3 | 16 | 1 | 4 | 4 | 4 | 1 | 4 | 1 |
| 4 | 16 | 1 | 8 | 2 | 4 | 2 | 4 | 1 |
| 5 | 20 | 1 | 4 | 5 | 4 | 1 | 4 | 1 |
| 6 | 24 | 1 | 4 | 6 | 4 | 1 | 4 | 1 |
| 7 | 24 | 1 | 12 | 2 | 4 | 3 | 4 | 1 |
| 8 | 28 | 1 | 4 | 7 | 4 | 1 | 4 | 1 |
| 9 | 32 | 1 | 16 | 2 | 8 | 2 | 4 | 2 |
| 10 | 36 | 1 | 12 | 3 | 4 | 3 | 4 | 1 |
| 11 | 40 | 1 | 20 | 2 | 4 | 5 | 4 | 1 |
| 12 | 48 | 1 | 16 | 3 | 8 | 2 | 4 | 2 |
| 13 | 48 | 1 | 24 | 2 | 12 | 2 | 4 | 3 |
| 14 | 52 | 1 | 4 | 13 | 4 | 1 | 4 | 1 |
| 15 | 56 | 1 | 28 | 2 | 4 | 7 | 4 | 1 |
| 16 | 60 | 1 | 20 | 3 | 4 | 5 | 4 | 1 |
| 17 | 64 | 1 | 32 | 2 | 16 | 2 | 4 | 4 |
| 18 | 72 | 1 | 24 | 3 | 12 | 2 | 4 | 3 |
| 19 | 72 | 1 | 36 | 2 | 12 | 3 | 4 | 3 |
| 20 | 76 | 1 | 4 | 19 | 4 | 1 | 4 | 1 |
| 21 | 80 | 1 | 40 | 2 | 20 | 2 | 4 | 5 |
| 22 | 88 | 1 | 44 | 2 | 4 | 11 | 4 | 1 |
| 23 | 96 | 1 | 32 | 3 | 16 | 2 | 4 | 4 |
| 24 | 96 | 1 | 48 | 2 | 24 | 2 | 4 | 6 |
| 25 | 104 | 1 | 52 | 2 | 4 | 13 | 4 | 1 |
| 26 | 112 | 1 | 56 | 2 | 28 | 2 | 4 | 7 |
| 27 | 120 | 1 | 60 | 2 | 20 | 3 | 4 | 5 |
| 28 | 120 | 1 | 40 | 3 | 8 | 5 | 4 | 2 |
| 29 | 120 | 1 | 24 | 5 | 12 | 2 | 4 | 3 |
| 30 | 128 | 1 | 64 | 2 | 32 | 2 | 4 | 8 |
| 31 | 128 | 1 | 64 | 2 | 16 | 4 | 4 | 4 |
| 32 | 128 | 1 | 16 | 8 | 8 | 2 | 4 | 2 |
| 33 | 132 | 1 | 44 | 3 | 4 | 11 | 4 | 1 |
| 34 | 136 | 1 | 68 | 2 | 4 | 17 | 4 | 1 |
| 35 | 144 | 1 | 72 | 2 | 36 | 2 | 4 | 9 |
| 36 | 144 | 1 | 48 | 3 | 24 | 2 | 12 | 2 |
| 37 | 144 | 1 | 48 | 3 | 16 | 3 | 4 | 4 |
| 38 | 144 | 1 | 16 | 9 | 8 | 2 | 4 | 2 |
| 39 | 152 | 1 | 76 | 2 | 4 | 19 | 4 | 1 |
| 40 | 160 | 1 | 80 | 2 | 40 | 2 | 4 | 10 |
| 41 | 160 | 1 | 80 | 2 | 20 | 4 | 4 | 5 |
| 42 | 160 | 1 | 32 | 5 | 16 | 2 | 4 | 4 |
| 43 | 168 | 1 | 84 | 2 | 28 | 3 | 4 | 7 |
| 44 | 176 | 1 | 88 | 2 | 44 | 2 | 4 | 11 |
| 45 | 184 | 1 | 92 | 2 | 4 | 23 | 4 | 1 |
| 46 | 192 | 1 | 96 | 2 | 48 | 2 | 4 | 12 |
| 47 | 192 | 1 | 96 | 2 | 24 | 4 | 4 | 6 |
| 48 | 192 | 1 | 64 | 3 | 16 | 4 | 4 | 4 |
| 49 | 192 | 1 | 24 | 8 | 8 | 3 | 4 | 2 |
| 50 | 208 | 1 | 104 | 2 | 52 | 2 | 4 | 13 |
| 51 | 216 | 1 | 108 | 2 | 36 | 3 | 4 | 9 |
| 52 | 224 | 1 | 112 | 2 | 56 | 2 | 4 | 14 |
| 53 | 240 | 1 | 120 | 2 | 60 | 2 | 4 | 15 |
| 54 | 240 | 1 | 80 | 3 | 20 | 4 | 4 | 5 |
| 55 | 240 | 1 | 48 | 5 | 16 | 3 | 8 | 2 |
| 56 | 240 | 1 | 24 | 10 | 12 | 2 | 4 | 3 |
| 57 | 256 | 1 | 128 | 2 | 64 | 2 | 4 | 16 |
| 58 | 256 | 1 | 128 | 2 | 32 | 4 | 4 | 8 |
| 59 | 256 | 1 | 16 | 16 | 8 | 2 | 4 | 2 |
| 60 | 264 | 1 | 132 | 2 | 44 | 3 | 4 | 11 |
| 61 | 272 | 1 | 136 | 2 | 68 | 2 | 4 | 17 |
| 62 | 272 | 1 | 68 | 4 | 4 | 17 | 4 | 1 |
| 63 | 272 | 1 | 16 | 17 | 8 | 2 | 4 | 2 |

The technical subject matters to be achieved by the disclosure are not limited to those as described above, and unmentioned or other technical subject matters will be clearly understood by those of ordinary skill in the art to which the disclosure pertains from the following description.

According to the aspects of the disclosure, it is possible to provide a method and an apparatus using a reference signal.

Further, according to the aspects of the disclosure, it is possible to allocate and transmit an SRS resource to in a UE-specific manner in case of transmitting the SRS in consideration of a bandwidth part. Further, according to the aspects of the disclosure, unlike LTE, it is possible to consider a UE bandwidth and a bandwidth in a bandwidth part without considering the system bandwidth.

Further, according to the aspects of the disclosure, the UE can receive the SRS bandwidth (BW) and the UE SRS BW from the base station through UE-specific signaling, receive the frequency position for transmitting the SRS, and transmit the SRS to the base station.

Further, according to the aspects of the disclosure, it is possible to determine the frequency position for transmitting the SRS based on frequency information having an absolute value based on the system bandwidth.

Other aspects, advantages, and salient features of the disclosure will become apparent to those skilled in the art from the following detailed description, which, taken in conjunction with the annexed drawings, discloses various embodiments of the disclosure.

The following description with reference to the accompanying drawings is provided to assist in a comprehensive understanding of various embodiments of the disclosure as defined the claims. It includes various specific details to assist in that understanding but these are to be regarded as merely exemplary. Accordingly, those of ordinary skill in the art will recognize that various changes and modifications of the various embodiments described herein can be made without departing from the scope of the appended claims. In addition, descriptions of well-known functions and configurations may be omitted for clarity and conciseness.

The terms and words used in the following description and claims are not limited to the bibliographical meanings, but, are merely used by the inventor to enable a clear and consistent understanding of the disclosure. Accordingly, it should be apparent to those skilled in the art that the following description of various embodiments of the disclosure is provided for illustration purpose only and not for the purpose of limiting the disclosure as defined by the appended claims.

It is to be understood that the singular forms "a," "an," and "the" include plural referents unless the context clearly dictates otherwise. Thus, for example, reference to "a component surface" includes reference to one or more of such surfaces.

In explaining embodiments of the disclosure, explanation of technical contents which are well known in the art to which the disclosure pertains and are not directly related to the disclosure will be omitted. This is to transfer the subject matter of the disclosure more clearly without obscuring the same through omission of unnecessary explanations.

For the same reason, in the accompanying drawings, some constituent elements may be exaggerated, omitted, or briefly illustrated. Further, sizes of the respective constituent elements do not completely reflect the actual sizes thereof. In the drawings, the same drawing reference numerals are used for the same or corresponding elements across various figures.

The aspects and features of the disclosure and methods for achieving the aspects and features will be apparent by referring to the embodiments to be described in detail with reference to the accompanying drawings. However, the disclosure is not limited to the embodiments disclosed hereinafter, but can be implemented in diverse forms. The matters defined in the description, such as the detailed construction and elements, are nothing but specific details provided to assist those of ordinary skill in the art in a comprehensive understanding of the disclosure, and the disclosure is only defined within the scope of the appended claims. In the entire description of the disclosure, the same drawing reference numerals are used for the same elements across various figures.

In this case, it will be understood that each block of the flowchart illustrations, and combinations of blocks in the flowchart illustrations, can be implemented by computer program instructions. These computer program instructions can be provided to a processor of a general purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Also, each block of the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

The term "-unit", as used in an embodiment, means, but is not limited to, a software or hardware component, such as field programmable gate array (FPGA) or application-specific integrated circuit (ASIC), which performs certain tasks. However, "-unit" does not mean to be limited to software or hardware. The term "-unit" may advantageously be configured to reside on the addressable storage medium and configured to execute on one or more processors. Thus, "-unit" may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. The functionality provided for in the components and "-units" may be combined into fewer components and "-units" or further separated into additional components and "-units". Further, the components and "-units" may be implemented to operate one or more central processing units (CPUs) in a device or a security multimedia card.

Beamforming is a technology capable of expecting reduction of unnecessary signal interferences by extending a transmission distance through concentration of an arrival area of radio waves in a specific direction using two or more array antennas and by simultaneously reducing levels of signals received in directions excluding the corresponding concentrated direction. In case of applying the beamforming technology, it can be expected to increase service areas and to reduce interference signals. However, for this, it is necessary to match a beam direction between a base station and a user equipment (UE) in order to form an optimum beam. That is, it is required to seek the beam direction having the optimum beam strength.

In case of a downlink, a periodic synchronization signal or a UE-specific channel state information-reference signal (CSI-RS) may be used as a training signal for the beamforming. The CSI-RS has been used as a downlink beam training signal in a full dimension multiple input multiple output (FD-MIMO).

However, in case of an uplink, a training signal for this has not been defined. As an uplink beam training signal, a random access channel (RACH), a sounding reference signal (SRS), or a UL demodulation reference signal (UL DMRS) may be considered. However, among the above signals, the RACH and the UL DMRS do not have periodicity.

In case of the SRS, an SRS subframe that is actually transmitted by a UE is designated and transmitted through cell-specific SRS configuration and UE-specific SRS configuration in long-term evolution (LTE). Next, a method for transmitting an SRS in LTE will be described in detail.

In LTE, cell-specific configuration for frequency configuration has been defined as follows.

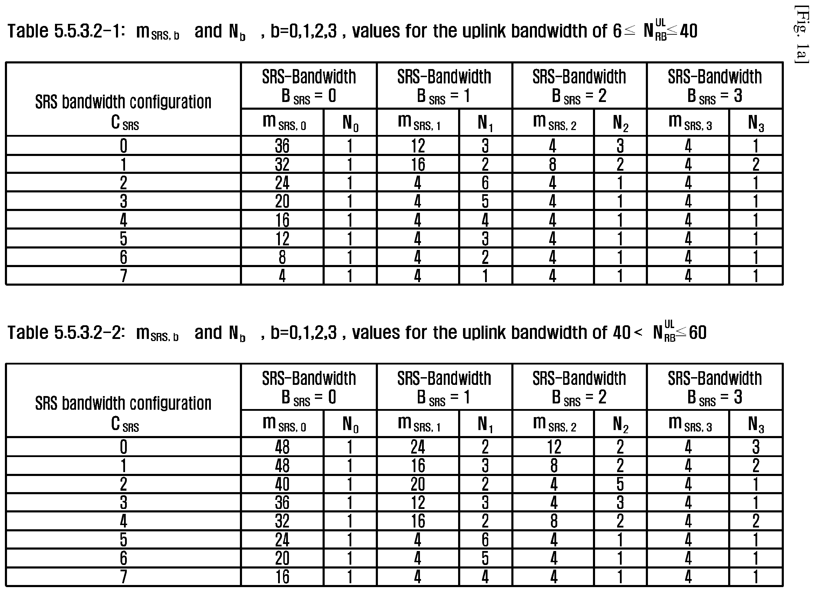

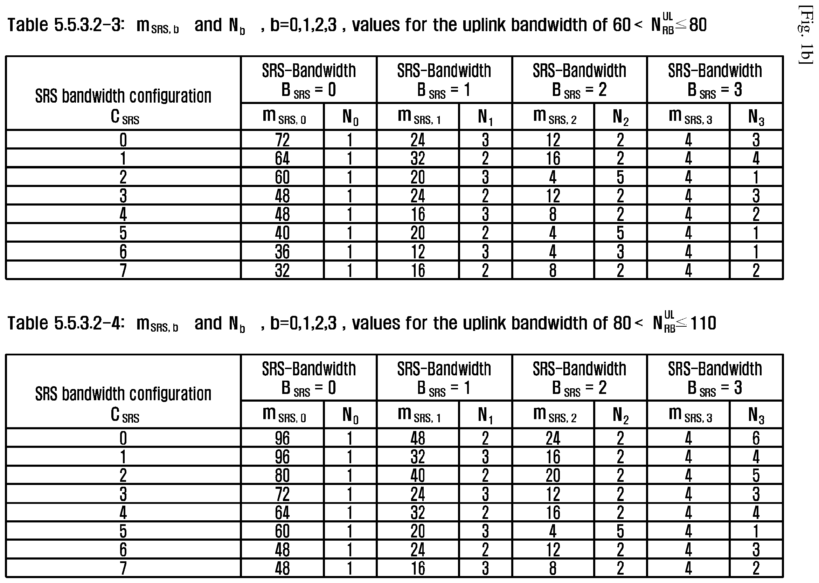

FIGS. 1a and 1b are diagrams explaining a method for configuring a cell-specific SRS parameter for SRS frequency resource configuration and an SRS bandwidth through C_{SRS} in LTE according to various embodiments of the disclosure.

Referring to FIGS. 1a and 1b, one of four tables is selected in accordance with an uplink bandwidth, and in the selected table, an SRS bandwidth is determined in accordance with a C_{SRS} value. Accordingly, all UEs in a cell are allocated with the same SRS bandwidth, and transmit an SRS within the allocated SRS bandwidth.

However, in 5G communication, an operation is performed using the bandwidth part concept. The bandwidth part is the concept that if the UE capability cannot support the system bandwidth in the system bandwidth, a bandwidth that the UE can support can be configured and operated as the bandwidth part. For example, if the bandwidth that the UE can support is 10 MHz and the system bandwidth is 100 MHz, the bandwidth is configured as a value that is smaller than 10 MHz that is the bandwidth that the UE can support, and the operation is performed therein. Accordingly, since the SRS is also unable to support the SRS bandwidth in accordance with the cell-specific configuration, the C_{SRS} is transmitted to respective UEs through the UE-specific configuration, and the respective UEs are allocated with different SRS bandwidths to be operated. Accordingly, it is required to design new SRS bandwidths for the 5G communication. In order to design new SRS bandwidth allocation, the following matters should be considered. In FIGS. 1a and 1b, B_{SRS} indicates UE-specific SRS bandwidth. That is, in case of B_{SRS} =0, the UE transmits wideband SRS, and in case of B_{SRS} =3, the UE transmits narrow-band SRS. In case of the SRS bandwidth that is wider than that in LTE (e.g., 272 RB), it is required to determine up to how many B_{SRS} should be considered. Support of too small B_{SRS} may cause insufficient granularity between the wideband SRS transmission and the narrow-band SRS transmission. Since the UE-specific SRS bandwidth supported by the B_{SRS} should be made as a multiple of the SRS bandwidth in the minimum unit, four kinds of B_{SRS} may be considered in the same manner as the LTE. Further, it is preferable to design a table supporting from the minimum bandwidth (BW) to the maximum BW without defining a table in accordance with four kinds of uplink bandwidths as in the LTE, and to support the SRS bandwidth in accordance with UE capability.

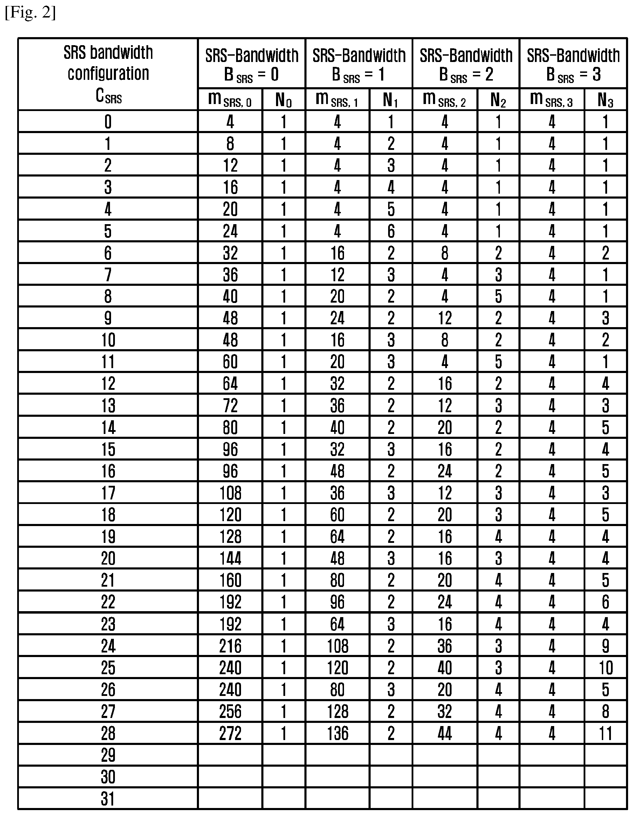

FIG. 2 is a diagram illustrating an SRS bandwidth table according to an embodiment of the disclosure.

Referring to FIG. 2, an SRS bandwidth table is disclosed, which can support the SRS bandwidth that is unrelated to the UL bandwidth while supporting the SRS bandwidth that is wider than that in LTE. As illustrated in FIG. 2, a UE previously shares UL bandwidth information that can be supported by the UE with a base station, and based on this, the base station allocates C_{SRS} and B_{SRS} to the UE in a UE-specific manner. In accordance with the C_{SRS} and the B_{SRS}, the UE generates an SRS as long as the corresponding length, and performs wideband SRS or narrow-band SRS transmission.

The table of FIG. 2 has been made to extend up to 272 RB based on the table of FIGS. 1a and 1b. A new design is necessary for entries exceeding 96 RB. As illustrated in FIG. 2, the entries exceeding 96 RB have been designed for the following background. Each entry of B_{SRS} of each C_{SRS} has a multiple of 4. This is because an SRS resource is made as a multiple of 4 RB. Further, values corresponding to mₛᵣₛ and n of (B_{SRS} = n) should be selected as values that can be expressed as multiplication of Nₙ₊₁ and (m_{srs,n+1}) of (B_{SRS} = n+1). Here, exceptionally, 272 RB may be configured to include entries including values that are not included in the entries that are smaller than 272 RB.

In a scenario where a 5G system and LTE coexist, the following SRS bandwidth can be configured. All UEs in a cell may be allocated with cell-specific SRS bandwidths illustrated in FIGS. 1a and 1b through a system information block (SIB). Here, if necessary, the UEs that operate the UE-specific BW in consideration of the bandwidth part may update the SRS bandwidth through reception of the values illustrated in FIG. 2 through UE-specific signaling.

In case of operating the SRS bandwidth based on the table of FIG. 2, signaling overhead can be reduced since all possible UE-specific BWs are not supported. However, as quantization is performed based on the table, a problem that the whole UE BW is unable to be sounded may occur.

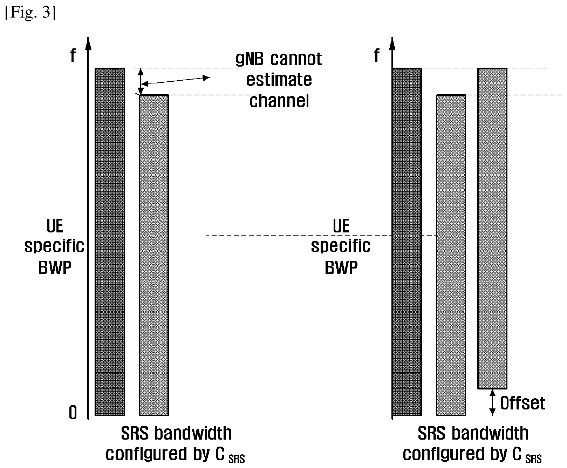

FIG. 3 is a diagram explaining a problem caused by quantized SRS bandwidth support according to an embodiment of the disclosure.

Referring to FIG. 3, a BW in accordance with UE capability may differ from a BW in a bandwidth part (BWP) allocated by a base station. That is, the BW in the BWP is unable to be larger than the BW in accordance with the UE capability. FIG. 3 shows a method for sounding the whole band while supporting the quantized SRS bandwidth. The left figure in FIG. 3 shows a problem that the whole band channels are unable to be estimated due to the difference between the UE-specific B W and the SRS bandwidth allocated to the C_{SRS}. Since the base station performs downlink/uplink scheduling of the UE based on the channels estimated through the SRS, it is very important to transmit the SRS through the whole band. In order to solve this problem, the base station can transmit information for adjusting the frequency position of the SRS to the UE through the UE-specific signaling (downlink control indicator (DCI)/media access control (MAC) control element (CE)/radio resource control (RRC) signaling).

A first method for adjusting the frequency position of the SRS is a method for transmitting the SRS so that the base station allocates a specific offset to the UE and the UE can cover all the bands that cannot be previously sounded by the UE as illustrated in FIG. 3.

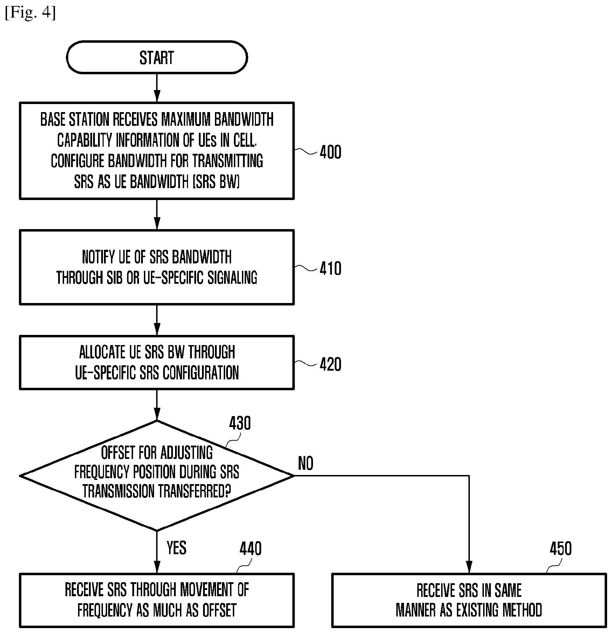

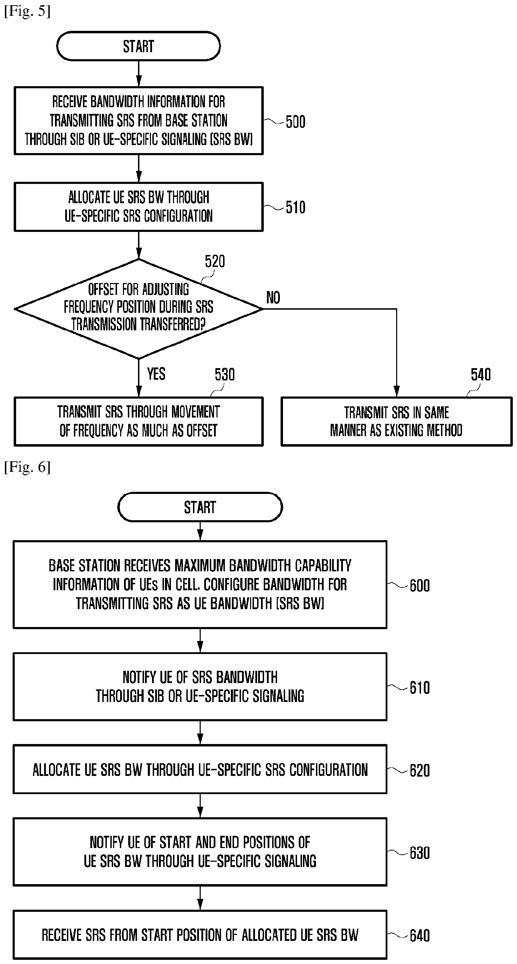

FIGS. 4 and 5 are diagrams illustrating operations of a base station and a UE for transmitting an SRS using an offset according to various embodiments of the disclosure.

FIG. 4 is a diagram illustrating an operation of a base station according to an embodiment of the disclosure. Referring to FIG. 4, the base station changes an SRS transmission frequency position using an offset and receives an SRS based on the changed SRS transmission frequency.

Referring to FIG. 4, at operation 400, the base station may receive bandwidth capability information of UEs in a cell. That is, the UE notifies the base station of the bandwidth information that can be supported by the UE. Base on this, the base station may configure a bandwidth-in-bandwidth part, and may configure an SRS bandwidth (SRS BW) for transmitting the SRS based on this. At operation 410, the base station may notify the UE of the configured SRS BW through the SIB or UE-specific signaling (RRC/MAC CE or DCI). At operation 420, the base station may allocate a UE SRS BW for the UE to actually transmit the SRS through UE-specific SRS configuration. At operation 430, the base station may determine whether an offset value for adjusting the frequency position has been transferred to the UE when the UE transmits the SRS. For example, the offset value may be included in the RRC configuration that is transmitted to the UE at operations 410 and 420. Accordingly, if the UE receives the SRS configuration that includes the corresponding offset value, it may generate the SRS in consideration of the offset from the time when it generates the SRS. Further, separately from the RRC configuration, the base station may transmit the offset to the UE using DCI/MAC CE. Accordingly, the UE may generate the SRS through the RRC configuration, and during an actual transmission, it may determine whether to reflect the offset value from the DCI/MAC CE. At operation 430, if the base station transfers the offset value that is not 0 to the UE in accordance with the determination of whether to transfer the offset value to the UE, it may receive the SRS transmitted by the UE through movement of the frequency as much as the offset value at operation 440, whereas if the base station does not transfer the offset value or allocates"0"as the offset value, it may receive the SRS in the same manner as the existing method at operation 450.

FIG. 5 is a diagram illustrating an operation of a UE according to an embodiment of the disclosure. Referring to FIG. 5, the UE changes an SRS transmission frequency position using an offset and transmits an SRS based on the changed SRS transmission frequency.

Referring to FIG. 5, at operation 500, the UE may receive the SRS BW from a base station through SIB or UE-specific signaling (RRC, DCI, or MAC CE). At operation 510, the UE may be allocated with the UE SRS BW from the base station through the UE-specific SRS configuration. At operation 520, the UE may identify whether an offset value for adjusting the frequency position has been transferred from the base station when the UE transmits the SRS. The offset value may be included in the RRC configuration that is transmitted by the base station at operation 500 or 510. Accordingly, if the UE receives the SRS configuration that includes the corresponding offset value from the base station, the UE may generate the SRS in consideration of the offset value from the time when the UE generates the SRS. Further, separately from the RRC configuration, the UE may estimate the offset value using DCI/MAC CE transmitted from the base station. Accordingly, the UE may generate the SRS through the RRC configuration of the SRS, and during an actual transmission, it may determine whether to reflect the offset value from the DCI/MAC CE. At operation 520, if the UE estimates the transferred offset value as an offset value that is not 0, it may transmit the SRS through movement of the frequency as much as the offset value at operation 530. Here, the offset value may be configured in the unit of Hz, RB, or RE. If the offset value is not transferred or is allocated as"0" at operation 520, the UE, at operation 540, transmits the SRS in the same manner as the existing method without applying the offset value.

A second method for adjusting the frequency position of the SRS is a method in which the base station notifies the UE of start and end positions for the UE to transmit the SRS. The base station may notify the UE of the start and end positions for the UE to transmit the SRS using a physical index based on the system bandwidth. Further, the base station may notify the UE of the start and end positions for the UE to transmit the SRS using a logical RB index in the UE BW. As described above, the start and end positions for transmitting the SRS may be notified to the UE through the UE-specific signaling (DCI/MAC CE/RRC signaling).

FIG. 6 is a diagram illustrating an operation of a base station for a second method for adjusting a frequency position of an SRS according to an embodiment of the disclosure. Referring to FIG. 6, the base station notifies the UE of start and end positions of the frequency for transmitting the SRS.

Referring to FIG. 6, at operation 600, the base station may receive bandwidth capability information of UEs in a cell. That is, the UE notifies the base station of the bandwidth information that can be supported by the UE. Base on this, the base station may configure a bandwidth-in-bandwidth part, and may configure an SRS bandwidth (SRS BW) for transmitting the SRS based on this. At operation 610, the base station may notify the UE of the configured SRS BW through the SIB or UE-specific signaling (RRC/MAC CE or DCI). At operation 620, the base station may allocate a UE SRS BW for the UE to actually transmit the SRS through UE-specific SRS configuration. At operation 630, the base station may notify the UE of start and end positions through UE-specific signaling so as to change the SRS transmission position of the UE. Here, the start and end positions for the UE to transmit the SRS may be expressed as Hz, RE index, or RB index. At operation 640, the base station may receive the SRS transmitted by the UE from the start and end positions of the UE SRS BW allocated to the UE.

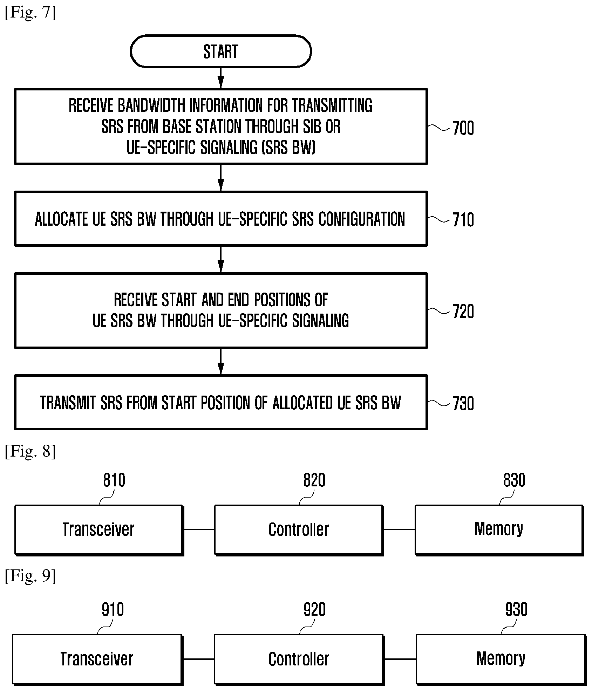

FIG. 7 is a diagram illustrating an operation of a UE for a second method for adjusting a frequency position of an SRS according to an embodiment of the disclosure. Referring to FIG. 7, the UE transmits an SRS based on start and end position information of the frequency for transmitting the SRS.

Referring to FIG. 7, at operation 700, the UE may receive an SRS BW from a base station through SIB or UE-specific signaling (RRC, DCI, or MAC CE). At operation 710, the UE may be allocated with a UE SRS BW from the base station through UE-specific SRS configuration. At operation 720, the UE may be allocated with the frequency position for the UE to transmit the SRS from the base station. The UE may be allocated with a start frequency position, an end position, or start and end positions for the UE to transmit the SRS from the base station through the UE-specific signaling. Such frequency information may be an absolute value based on physical PRB index 0 based on the system bandwidth. That is, based on the physical PRB index 0, Hz, RE index, or RB index may be allocated. Further, start and end values may be allocated based on the UE BW. That is, based on the UE BW RB index 0, Hz unit, RE, or RB index may be allocated. At operation 730, the UE transmits the SRS based on the allocated start and end positions of the SRS.

The embodiments of FIGS. 4 and 6 can be embodied in combination, and it is also possible to combine partial operations of the embodiments of FIGS. 5 and 7.

FIG. 8 is a diagram illustrating the structure of a base station according to an embodiment of the disclosure.

Referring to FIG. 8, the base station may include a transceiver 810, a controller 820 (e.g., at least one processor), and a storage 830 (e.g., a memory). In an embodiment of the disclosure, the controller 820 may be defined as a circuit, an application-specific integrated circuit, or at least one processor. The transceiver 810 may transmit and receive signals with other network entities. The controller 820 may control the overall operation of the base station according to an embodiment proposed in the disclosure. The storage 830 may store at least one of information transmitted and received through the transceiver 810 and information generated through the controller 820.

FIG. 9 is a diagram illustrating the structure of a UE according to an embodiment of the disclosure.

Referring to FIG. 9, the terminal may include a transceiver 910, a controller 920 (e.g., at least one processor), and a storage 930 (e.g., a memory). In an embodiment of the disclosure, the controller 920 may be defined as a circuit, an application-specific integrated circuit, or at least one processor. The transceiver 910 may transmit and receive signals with other network entities. The controller 920 may control the overall operation of the terminal according to an embodiment proposed in the disclosure. The storage 930 may store at least one of information transmitted and received through the transceiver 910 and information generated through the controller 920.

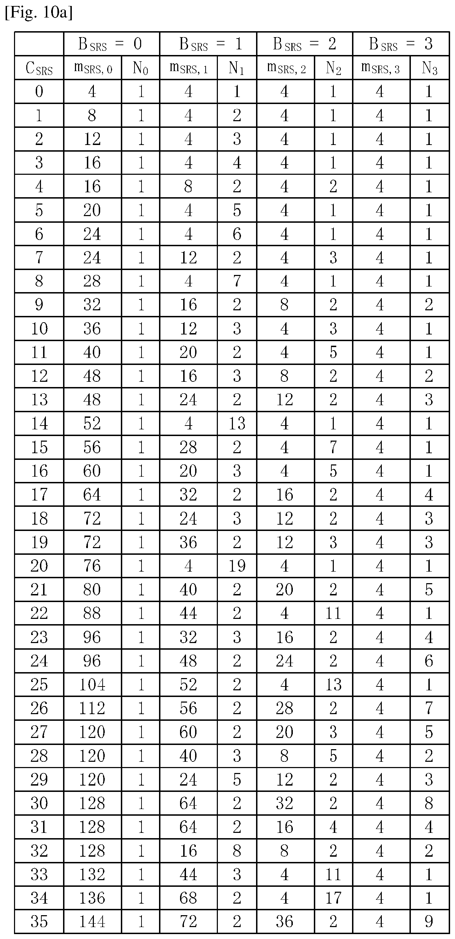

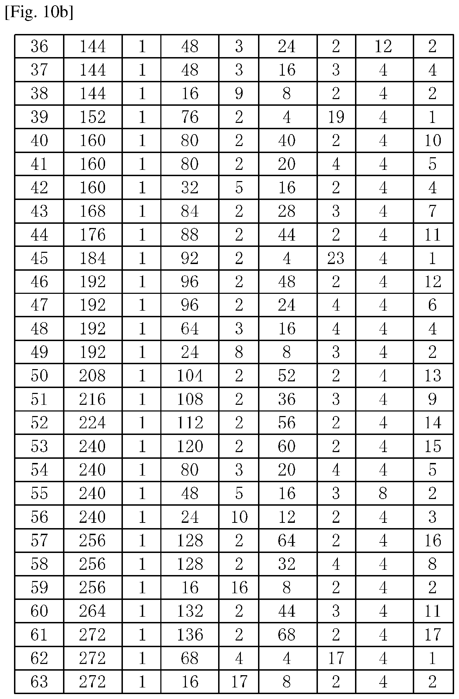

FIGS. 10a and 10b are diagrams illustrating another embodiment in which an SRS bandwidth is extended up to 272 RB based on tables illustrated in FIGS. 1a and 1b according to various embodiments of the disclosure.

Referring to FIGS. 10a and 10b, in the same manner as the table illustrated in FIG. 2, a new design is necessary for entries exceeding 96 RB. The entries exceeding 96 RB have been designed for the following background. Each entry of B_{SRS} of each C_{SRS} has a multiple of 4. This is because an SRS resource is made as a multiple of 4 RB. In the last column B_{SRS} =3, 4 RB that is the minimum unit of SRS allocation is supported. Further, as the first feature of a network structure, values corresponding to mₛᵣₛ and n of (B_{SRS} = n) are selected as values that can be expressed as multiplication of Nₙ₊₁ and (m_{srs, n+1}) of (B_{SRS} = n+1). Further, in case of supporting 96 RB or more, it is configured to have a network structure using the existing entries (96 RB or less). For example, in order to support 120 RB, 60 RB that is a half thereof is supported, and support of 60 RB is configured as defined in configuration index 11. Through this, the base station can minimize complexity of SRS detection when supporting a plurality of entries. As described above, the values using the network structure applied as elements in a new entry are selected through the reuse of the values in the existing entries among the entries having the values that is equal to or larger than 96 RB and equal to or smaller than 272 RB, and the selected values are applied to SRS bandwidth configuration (31st, 37th, 47th, 48th, 54th, and 58th indexes). Here, exceptionally, 272 RB may be configured to include the entries including the values that are not included in the entries that are smaller than 272 RB. Further, it is possible to support RB that is smaller than the RB supported by the bandwidth part and is a multiple of 4 that is the largest value (20th, 33rd, 51st, and 60th indexes). Through this, it is possible to estimate the SRS bandwidth that is closest to the bandwidth part. Further, it is possible to include the entries that can be divided by a multiple of 4 with respect to B_{SRS} =1,2,3 in consideration of the entries including a multiple of 8 and a multiple of 16. FIG. 2 as described above is featured to include the entries having the characteristics of the network structure / the support of the bandwidth of the bandwidth part / B_{SRS} =0 having a multiple of 8 or 16 and B_{SRS} =1,2,3 having a multiple of 4.

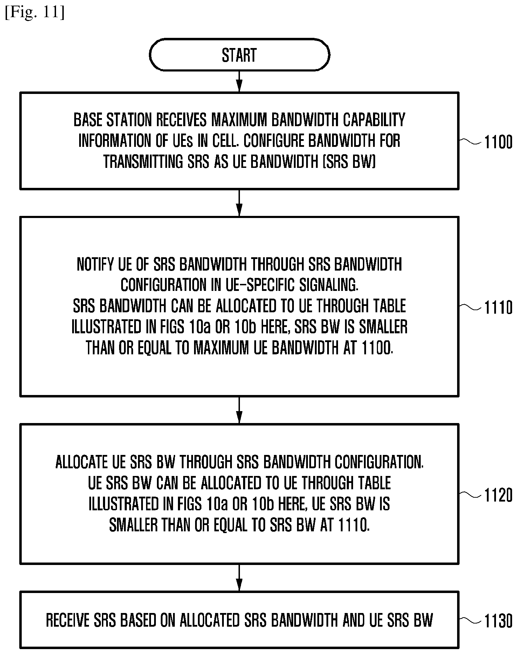

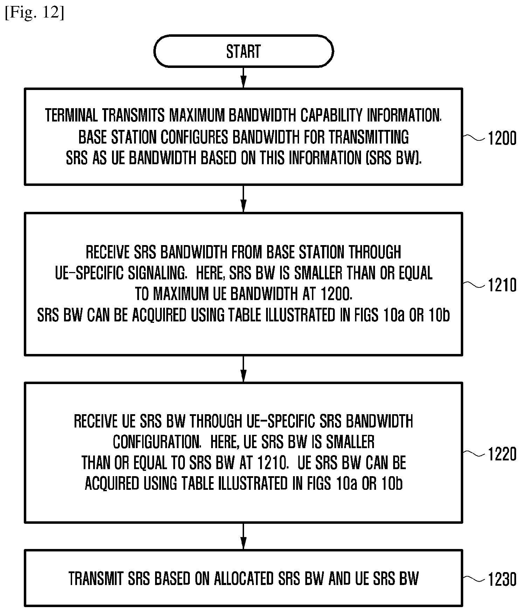

FIGS. 11 and 12 are diagrams illustrating processes of a base station and a UE to allocate an SRS using the table illustrated in FIGS. 10a and 10b, and to transmit and receive the allocated SRS according to various embodiments of the disclosure.

Referring to FIGS. 11 and 12, the base station may receive maximum bandwidth capability information of UEs in a cell, and may configure a bandwidth for transmitting an SRS at operation 1100.

The configured SRS bandwidth (SRS BW) may be configures as an index of an SRS bandwidth configuration (C_{SRS}) in the table of FIGS. 10a and 10b at operation 1110. Here, the SRS BW may be smaller than or equal to the bandwidth that can be supported by the UE.

The base station may notify the UE of the UE SRS BW for notifying the length of the SRS transmitted at a time by the UE using the table illustrated in FIGS. 10a and 10b at operation 1120. If the UE SRS BW is equal to the SRS BW, the UE may transmit a periodic SRS once, whereas if the UE SRS BW is smaller than the SRS BW, the UE may transmit the SRS several times. For example, if the SRS BW is set to 120 RB, and the UE SRS BW is set to 40 RB, the UE that transmits the periodic SRS can transmit the SRS three times through frequency hopping, and thus the base station is required to receive the SRS corresponding to this.

The base station can receive the SRS based on the allocated SRS bandwidth and the UE SRS BW at operation 1130.

Referring to FIG. 12, the UE may transmit bandwidth information that can be supported by the UE in order for the base station to configure the SRS BW at operation 1200. Based on this information, the base station may configure a UE-specific SRS BW in consideration of the bandwidth part.

The UE may receive the SRS bandwidth from the base station at operation 1210. The SRS BW may be smaller than or equal to the maximum UE bandwidth at operation 1200. The SRS BW may be acquired using the C_{SRS} of the table illustrated in FIGS. 10a and 10b.

The UE may receive the UE SRS BW through the SRS bandwidth configuration at operation 1220. Here, the UE SRS BW may be smaller than or equal to the SRS BW at operation 1210. The UE SRS BW may also be acquired through the table illustrated in FIGS. 10a and 10b.

The UE may transmit the SRS based on the allocated SRS BW and the UE SRS BW at operation 1230.

While the disclosure has been shown and described with reference to various embodiments thereof, it will be understood by those skilled in the art that various changes in form and details may be made therein without departing from scope of the appended claims.

## Claims

1. A method of a user equipment, UE, in a wireless communication system, the method comprising:
transmitting, to a base station, information on a bandwidth supported by the UE;
receiving, from the base station, a first parameter and a second parameter associated with a sounding reference signal, SRS, by higher layer signaling, wherein the first parameter and the second parameter comprise UE-specific parameters;
identifying a bandwidth for the SRS based on the first parameter and the second parameter; and
transmitting, to the base station, the SRS based on the identified bandwidth for the SRS,
wherein the first parameter indicates UE-specific SRS bandwidth, BSRS, and the second parameter indicates an SRS bandwidth configuration, CSRS,
wherein a first value, BSRS=1, BSRS=2, or BSRS=3, of the first parameter indicates a first bandwidth set not including 272 resource blocks, RB, and a second value, BSRS=0, of the first parameter indicates a second bandwidth set including 272 RB in a predetermined table,
wherein values corresponding to mSRS and n of (BSRS= n) are selected as values that can be expressed as multiplication of Nn+1 and (mSRS,n+1) of (BSRS= n+1) and
wherein the first bandwidth set does not include a part of the second bandwidth set less than 272 RB,
wherein the predetermined table is:
| | BSRS = 0 | | BSRS = 1 | | BSRS = 2 | | BSRS = 3 | |
|---|---|---|---|---|---|---|---|---|
| CSRS | mSRS,0 | N0 | mSRS,1 | N1 | mSRS,2 | N2 | mSRS,3 | N3 |
| 0 | 4 | 1 | 4 | 1 | 4 | 1 | 4 | 1 |
| 1 | 8 | 1 | 4 | 2 | 4 | 1 | 4 | 1 |
| 2 | 12 | 1 | 4 | 3 | 4 | 1 | 4 | 1 |
| 3 | 16 | 1 | 4 | 4 | 4 | 1 | 4 | 1 |
| 4 | 16 | 1 | 8 | 2 | 4 | 2 | 4 | 1 |
| 5 | 20 | 1 | 4 | 5 | 4 | 1 | 4 | 1 |
| 6 | 24 | 1 | 4 | 6 | 4 | 1 | 4 | 1 |
| 7 | 24 | 1 | 12 | 2 | 4 | 3 | 4 | 1 |
| 8 | 28 | 1 | 4 | 7 | 4 | 1 | 4 | 1 |
| 9 | 32 | 1 | 16 | 2 | 8 | 2 | 4 | 2 |
| 10 | 36 | 1 | 12 | 3 | 4 | 3 | 4 | 1 |
| 11 | 40 | 1 | 20 | 2 | 4 | 5 | 4 | 1 |
| 12 | 48 | 1 | 16 | 3 | 8 | 2 | 4 | 2 |
| 13 | 48 | 1 | 24 | 2 | 12 | 2 | 4 | 3 |
| 14 | 52 | 1 | 4 | 13 | 4 | 1 | 4 | 1 |
| 15 | 56 | 1 | 28 | 2 | 4 | 7 | 4 | 1 |
| 16 | 60 | 1 | 20 | 3 | 4 | 5 | 4 | 1 |
| 17 | 64 | 1 | 32 | 2 | 16 | 2 | 4 | 4 |
| 18 | 72 | 1 | 24 | 3 | 12 | 2 | 4 | 3 |
| 19 | 72 | 1 | 36 | 2 | 12 | 3 | 4 | 3 |
| 20 | 76 | 1 | 4 | 19 | 4 | 1 | 4 | 1 |
| 21 | 80 | 1 | 40 | 2 | 20 | 2 | 4 | 5 |
| 22 | 88 | 1 | 44 | 2 | 4 | 11 | 4 | 1 |
| 23 | 96 | 1 | 32 | 3 | 16 | 2 | 4 | 4 |
| 24 | 96 | 1 | 48 | 2 | 24 | 2 | 4 | 6 |
| 25 | 104 | 1 | 52 | 2 | 4 | 13 | 4 | 1 |
| 26 | 112 | 1 | 56 | 2 | 28 | 2 | 4 | 7 |
| 27 | 120 | 1 | 60 | 2 | 20 | 3 | 4 | 5 |
| 28 | 120 | 1 | 40 | 3 | 8 | 5 | 4 | 2 |
| 29 | 120 | 1 | 24 | 5 | 12 | 2 | 4 | 3 |
| 30 | 128 | 1 | 64 | 2 | 32 | 2 | 4 | 8 |
| 31 | 128 | 1 | 64 | 2 | 16 | 4 | 4 | 4 |
| 32 | 128 | 1 | 16 | 8 | 8 | 2 | 4 | 2 |
| 33 | 132 | 1 | 44 | 3 | 4 | 11 | 4 | 1 |
| 34 | 136 | 1 | 68 | 2 | 4 | 17 | 4 | 1 |
| 35 | 144 | 1 | 72 | 2 | 36 | 2 | 4 | 9 |
| 36 | 144 | 1 | 48 | 3 | 24 | 2 | 12 | 2 |
| 37 | 144 | 1 | 48 | 3 | 16 | 3 | 4 | 4 |
| 38 | 144 | 1 | 16 | 9 | 8 | 2 | 4 | 2 |
| 39 | 152 | 1 | 76 | 2 | 4 | 19 | 4 | 1 |
| 40 | 160 | 1 | 80 | 2 | 40 | 2 | 4 | 10 |
| 41 | 160 | 1 | 80 | 2 | 20 | 4 | 4 | 5 |
| 42 | 160 | 1 | 32 | 5 | 16 | 2 | 4 | 4 |
| 43 | 168 | 1 | 84 | 2 | 28 | 3 | 4 | 7 |
| 44 | 176 | 1 | 88 | 2 | 44 | 2 | 4 | 11 |
| 45 | 184 | 1 | 92 | 2 | 4 | 23 | 4 | 1 |
| 46 | 192 | 1 | 96 | 2 | 48 | 2 | 4 | 12 |
| 47 | 192 | 1 | 96 | 2 | 24 | 4 | 4 | 6 |
| 48 | 192 | 1 | 64 | 3 | 16 | 4 | 4 | 4 |
| 49 | 192 | 1 | 24 | 8 | 8 | 3 | 4 | 2 |
| 50 | 208 | 1 | 104 | 2 | 52 | 2 | 4 | 13 |
| 51 | 216 | 1 | 108 | 2 | 36 | 3 | 4 | 9 |
| 52 | 224 | 1 | 112 | 2 | 56 | 2 | 4 | 14 |
| 53 | 240 | 1 | 120 | 2 | 60 | 2 | 4 | 15 |
| 54 | 240 | 1 | 80 | 3 | 20 | 4 | 4 | 5 |
| 55 | 240 | 1 | 48 | 5 | 16 | 3 | 8 | 2 |
| 56 | 240 | 1 | 24 | 10 | 12 | 2 | 4 | 3 |
| 57 | 256 | 1 | 128 | 2 | 64 | 2 | 4 | 16 |
| 58 | 256 | 1 | 128 | 2 | 32 | 4 | 4 | 8 |
| 59 | 256 | 1 | 16 | 16 | 8 | 2 | 4 | 2 |
| 60 | 264 | 1 | 132 | 2 | 44 | 3 | 4 | 11 |
| 61 | 272 | 1 | 136 | 2 | 68 | 2 | 4 | 17 |
| 62 | 272 | 1 | 68 | 4 | 4 | 17 | 4 | 1 |
| 63 | 272 | 1 | 16 | 17 | 8 | 2 | 4 | 2 |

2. The method of claim 1, further comprising:
receiving, from the base station, offset information by higher layer signaling, the offset information being based on a common resource block; and
identifying a starting point for the bandwidth based on the offset information,
wherein the SRS is transmitted based on the bandwidth and the identified starting point.

3. The method of claim 1,
wherein the bandwidth for the SRS includes up to 272 resource blocks, RB.

4. A method of a base station in a wireless communication system, the method comprising:
receiving, from a user equipment, UE, information on a bandwidth supported by the UE;
transmitting, to the UE, a first parameter and a second parameter associated with a sounding reference signal, SRS, by higher layer signaling, wherein the first parameter and the second parameter comprise UE-specific parameters; and
receiving, from the UE, the SRS based on a bandwidth for the SRS, the bandwidth being identified based on the first parameter and the second parameter,
wherein the first parameter indicates UE-specific SRS bandwidth is a UE-specific parameter, BSRS, and the second parameter indicates an SRS bandwidth configuration, CSRS,
wherein a first value, BSRS=1, BSRS=2, or BSRS=3, of the first parameter indicates a first bandwidth set not including 272 resource blocks, RB, and a second value, BSRS=0, of the first parameter indicates a second bandwidth set including 272 RB in a predetermined table,
wherein values corresponding to mSRS and n of (BSRS= n) are selected as values that can be expressed as multiplication of Nn+1 and (mSRS,n+1) of (BSRS= n+1) and
wherein the first bandwidth set does not include a part of the second bandwidth set less than 272 RB
wherein the predetermined table is:
| | BSRS = 0 | | BSRS = 1 | | BSRS = 2 | | BSRS = 3 | |
|---|---|---|---|---|---|---|---|---|
| CSRS | mSRS,0 | N0 | mSRS,1 | N1 | mSRS,2 | N2 | mSRS,3 | N3 |
| 0 | 4 | 1 | 4 | 1 | 4 | 1 | 4 | 1 |
| 1 | 8 | 1 | 4 | 2 | 4 | 1 | 4 | 1 |
| 2 | 12 | 1 | 4 | 3 | 4 | 1 | 4 | 1 |
| 3 | 16 | 1 | 4 | 4 | 4 | 1 | 4 | 1 |
| 4 | 16 | 1 | 8 | 2 | 4 | 2 | 4 | 1 |
| 5 | 20 | 1 | 4 | 5 | 4 | 1 | 4 | 1 |
| 6 | 24 | 1 | 4 | 6 | 4 | 1 | 4 | 1 |
| 7 | 24 | 1 | 12 | 2 | 4 | 3 | 4 | 1 |
| 8 | 28 | 1 | 4 | 7 | 4 | 1 | 4 | 1 |
| 9 | 32 | 1 | 16 | 2 | 8 | 2 | 4 | 2 |
| 10 | 36 | 1 | 12 | 3 | 4 | 3 | 4 | 1 |
| 11 | 40 | 1 | 20 | 2 | 4 | 5 | 4 | 1 |
| 12 | 48 | 1 | 16 | 3 | 8 | 2 | 4 | 2 |
| 13 | 48 | 1 | 24 | 2 | 12 | 2 | 4 | 3 |
| 14 | 52 | 1 | 4 | 13 | 4 | 1 | 4 | 1 |
| 15 | 56 | 1 | 28 | 2 | 4 | 7 | 4 | 1 |
| 16 | 60 | 1 | 20 | 3 | 4 | 5 | 4 | 1 |
| 17 | 64 | 1 | 32 | 2 | 16 | 2 | 4 | 4 |
| 18 | 72 | 1 | 24 | 3 | 12 | 2 | 4 | 3 |
| 19 | 72 | 1 | 36 | 2 | 12 | 3 | 4 | 3 |
| 20 | 76 | 1 | 4 | 19 | 4 | 1 | 4 | 1 |
| 21 | 80 | 1 | 40 | 2 | 20 | 2 | 4 | 5 |
| 22 | 88 | 1 | 44 | 2 | 4 | 11 | 4 | 1 |
| 23 | 96 | 1 | 32 | 3 | 16 | 2 | 4 | 4 |
| 24 | 96 | 1 | 48 | 2 | 24 | 2 | 4 | 6 |
| 25 | 104 | 1 | 52 | 2 | 4 | 13 | 4 | 1 |
| 26 | 112 | 1 | 56 | 2 | 28 | 2 | 4 | 7 |
| 27 | 120 | 1 | 60 | 2 | 20 | 3 | 4 | 5 |
| 28 | 120 | 1 | 40 | 3 | 8 | 5 | 4 | 2 |
| 29 | 120 | 1 | 24 | 5 | 12 | 2 | 4 | 3 |
| 30 | 128 | 1 | 64 | 2 | 32 | 2 | 4 | 8 |
| 31 | 128 | 1 | 64 | 2 | 16 | 4 | 4 | 4 |
| 32 | 128 | 1 | 16 | 8 | 8 | 2 | 4 | 2 |
| 33 | 132 | 1 | 44 | 3 | 4 | 11 | 4 | 1 |
| 34 | 136 | 1 | 68 | 2 | 4 | 17 | 4 | 1 |
| 35 | 144 | 1 | 72 | 2 | 36 | 2 | 4 | 9 |
| 36 | 144 | 1 | 48 | 3 | 24 | 2 | 12 | 2 |
| 37 | 144 | 1 | 48 | 3 | 16 | 3 | 4 | 4 |
| 38 | 144 | 1 | 16 | 9 | 8 | 2 | 4 | 2 |
| 39 | 152 | 1 | 76 | 2 | 4 | 19 | 4 | 1 |
| 40 | 160 | 1 | 80 | 2 | 40 | 2 | 4 | 10 |
| 41 | 160 | 1 | 80 | 2 | 20 | 4 | 4 | 5 |
| 42 | 160 | 1 | 32 | 5 | 16 | 2 | 4 | 4 |
| 43 | 168 | 1 | 84 | 2 | 28 | 3 | 4 | 7 |
| 44 | 176 | 1 | 88 | 2 | 44 | 2 | 4 | 11 |
| 45 | 184 | 1 | 92 | 2 | 4 | 23 | 4 | 1 |
| 46 | 192 | 1 | 96 | 2 | 48 | 2 | 4 | 12 |
| 47 | 192 | 1 | 96 | 2 | 24 | 4 | 4 | 6 |
| 48 | 192 | 1 | 64 | 3 | 16 | 4 | 4 | 4 |
| 49 | 192 | 1 | 24 | 8 | 8 | 3 | 4 | 2 |
| 50 | 208 | 1 | 104 | 2 | 52 | 2 | 4 | 13 |
| 51 | 216 | 1 | 108 | 2 | 36 | 3 | 4 | 9 |
| 52 | 224 | 1 | 112 | 2 | 56 | 2 | 4 | 14 |
| 53 | 240 | 1 | 120 | 2 | 60 | 2 | 4 | 15 |
| 54 | 240 | 1 | 80 | 3 | 20 | 4 | 4 | 5 |
| 55 | 240 | 1 | 48 | 5 | 16 | 3 | 8 | 2 |
| 56 | 240 | 1 | 24 | 10 | 12 | 2 | 4 | 3 |
| 57 | 256 | 1 | 128 | 2 | 64 | 2 | 4 | 16 |
| 58 | 256 | 1 | 128 | 2 | 32 | 4 | 4 | 8 |
| 59 | 256 | 1 | 16 | 16 | 8 | 2 | 4 | 2 |
| 60 | 264 | 1 | 132 | 2 | 44 | 3 | 4 | 11 |
| 61 | 272 | 1 | 136 | 2 | 68 | 2 | 4 | 17 |
| 62 | 272 | 1 | 68 | 4 | 4 | 17 | 4 | 1 |
| 63 | 272 | 1 | 16 | 17 | 8 | 2 | 4 | 2 |

5. The method of claim 4, further comprising:
transmitting, to the UE, offset information by higher layer signaling, the offset information being based on a common resource block,
wherein the SRS is received based on the bandwidth and a starting point for the bandwidth, the starting point being identified based on the offset information.

6. The method of claim 4,
wherein the bandwidth for the SRS includes up to 272 resource blocks, RB.

7. A user equipment, UE, operable within a wireless communication system, the UE comprising:
a transceiver (910); and
at least one processor (920) operably connected to the transceiver (910) and configured to:
control the transceiver (910) to transmit, to a base station, information on a bandwidth supported by the UE,
control the transceiver (910) to receive, from the base station, a first parameter and a second parameter associated with a sounding reference signal, SRS, by higher layer signaling, wherein the first parameter and the second parameter comprise UE-specific parameters,
identify a bandwidth for the SRS based on the first parameter and the second parameter, and
control the transceiver (910) to transmit, to the base station, the SRS based on the identified bandwidth for the SRS,
wherein the first parameter indicates UE-specific SRS bandwidth is a UE-specific parameter, BSRS, and the second parameter indicates an SRS bandwidth configuration, CSRS,
wherein a first value, BSRS=1, BSRS=2, or BSRS=3, of the first parameter indicates a first bandwidth set not including 272 resource blocks, RB, and a second value, BSRS=0, of the first parameter indicates a second bandwidth set including 272 RB in a predetermined table,
wherein values corresponding to mSRS and n of (BSRS= n) are selected as values that can be expressed as multiplication of Nn+1 and (mSRS,n+1) of (BSRS= n+1) and
wherein the first bandwidth set does not include a part of the second bandwidth set less than 272 RB,
wherein the predetermined table is:
| | BSRS = 0 | | BSRS = 1 | | BSRS = 2 | | BSRS = 3 | |
|---|---|---|---|---|---|---|---|---|
| CSRS | mSRS,0 | N0 | mSRS,1 | N1 | mSRS,2 | N2 | mSRS,3 | N3 |
| 0 | 4 | 1 | 4 | 1 | 4 | 1 | 4 | 1 |
| 1 | 8 | 1 | 4 | 2 | 4 | 1 | 4 | 1 |
| 2 | 12 | 1 | 4 | 3 | 4 | 1 | 4 | 1 |
| 3 | 16 | 1 | 4 | 4 | 4 | 1 | 4 | 1 |
| 4 | 16 | 1 | 8 | 2 | 4 | 2 | 4 | 1 |
| 5 | 20 | 1 | 4 | 5 | 4 | 1 | 4 | 1 |
| 6 | 24 | 1 | 4 | 6 | 4 | 1 | 4 | 1 |
| 7 | 24 | 1 | 12 | 2 | 4 | 3 | 4 | 1 |
| 8 | 28 | 1 | 4 | 7 | 4 | 1 | 4 | 1 |
| 9 | 32 | 1 | 16 | 2 | 8 | 2 | 4 | 2 |
| 10 | 36 | 1 | 12 | 3 | 4 | 3 | 4 | 1 |
| 11 | 40 | 1 | 20 | 2 | 4 | 5 | 4 | 1 |
| 12 | 48 | 1 | 16 | 3 | 8 | 2 | 4 | 2 |
| 13 | 48 | 1 | 24 | 2 | 12 | 2 | 4 | 3 |
| 14 | 52 | 1 | 4 | 13 | 4 | 1 | 4 | 1 |
| 15 | 56 | 1 | 28 | 2 | 4 | 7 | 4 | 1 |
| 16 | 60 | 1 | 20 | 3 | 4 | 5 | 4 | 1 |
| 17 | 64 | 1 | 32 | 2 | 16 | 2 | 4 | 4 |
| 18 | 72 | 1 | 24 | 3 | 12 | 2 | 4 | 3 |
| 19 | 72 | 1 | 36 | 2 | 12 | 3 | 4 | 3 |
| 20 | 76 | 1 | 4 | 19 | 4 | 1 | 4 | 1 |
| 21 | 80 | 1 | 40 | 2 | 20 | 2 | 4 | 5 |
| 22 | 88 | 1 | 44 | 2 | 4 | 11 | 4 | 1 |
| 23 | 96 | 1 | 32 | 3 | 16 | 2 | 4 | 4 |
| 24 | 96 | 1 | 48 | 2 | 24 | 2 | 4 | 6 |
| 25 | 104 | 1 | 52 | 2 | 4 | 13 | 4 | 1 |
| 26 | 112 | 1 | 56 | 2 | 28 | 2 | 4 | 7 |
| 27 | 120 | 1 | 60 | 2 | 20 | 3 | 4 | 5 |
| 28 | 120 | 1 | 40 | 3 | 8 | 5 | 4 | 2 |
| 29 | 120 | 1 | 24 | 5 | 12 | 2 | 4 | 3 |
| 30 | 128 | 1 | 64 | 2 | 32 | 2 | 4 | 8 |
| 31 | 128 | 1 | 64 | 2 | 16 | 4 | 4 | 4 |
| 32 | 128 | 1 | 16 | 8 | 8 | 2 | 4 | 2 |
| 33 | 132 | 1 | 44 | 3 | 4 | 11 | 4 | 1 |
| 34 | 136 | 1 | 68 | 2 | 4 | 17 | 4 | 1 |
| 35 | 144 | 1 | 72 | 2 | 36 | 2 | 4 | 9 |
| 36 | 144 | 1 | 48 | 3 | 24 | 2 | 12 | 2 |
| 37 | 144 | 1 | 48 | 3 | 16 | 3 | 4 | 4 |
| 38 | 144 | 1 | 16 | 9 | 8 | 2 | 4 | 2 |
| 39 | 152 | 1 | 76 | 2 | 4 | 19 | 4 | 1 |
| 40 | 160 | 1 | 80 | 2 | 40 | 2 | 4 | 10 |
| 41 | 160 | 1 | 80 | 2 | 20 | 4 | 4 | 5 |
| 42 | 160 | 1 | 32 | 5 | 16 | 2 | 4 | 4 |
| 43 | 168 | 1 | 84 | 2 | 28 | 3 | 4 | 7 |
| 44 | 176 | 1 | 88 | 2 | 44 | 2 | 4 | 11 |
| 45 | 184 | 1 | 92 | 2 | 4 | 23 | 4 | 1 |
| 46 | 192 | 1 | 96 | 2 | 48 | 2 | 4 | 12 |
| 47 | 192 | 1 | 96 | 2 | 24 | 4 | 4 | 6 |
| 48 | 192 | 1 | 64 | 3 | 16 | 4 | 4 | 4 |
| 49 | 192 | 1 | 24 | 8 | 8 | 3 | 4 | 2 |
| 50 | 208 | 1 | 104 | 2 | 52 | 2 | 4 | 13 |
| 51 | 216 | 1 | 108 | 2 | 36 | 3 | 4 | 9 |
| 52 | 224 | 1 | 112 | 2 | 56 | 2 | 4 | 14 |
| 53 | 240 | 1 | 120 | 2 | 60 | 2 | 4 | 15 |
| 54 | 240 | 1 | 80 | 3 | 20 | 4 | 4 | 5 |
| 55 | 240 | 1 | 48 | 5 | 16 | 3 | 8 | 2 |
| 56 | 240 | 1 | 24 | 10 | 12 | 2 | 4 | 3 |
| 57 | 256 | 1 | 128 | 2 | 64 | 2 | 4 | 16 |
| 58 | 256 | 1 | 128 | 2 | 32 | 4 | 4 | 8 |
| 59 | 256 | 1 | 16 | 16 | 8 | 2 | 4 | 2 |
| 60 | 264 | 1 | 132 | 2 | 44 | 3 | 4 | 11 |
| 61 | 272 | 1 | 136 | 2 | 68 | 2 | 4 | 17 |
| 62 | 272 | 1 | 68 | 4 | 4 | 17 | 4 | 1 |
| 63 | 272 | 1 | 16 | 17 | 8 | 2 | 4 | 2 |

8. The UE of claim 7,
wherein the at least one processor (920) is further configured to:
control the transceiver to receive, from the base station, offset information by higher layer signaling, the offset information being based on a common resource block, and
identify a starting point for the bandwidth based on the offset information, and
wherein the SRS is transmitted based on the bandwidth and the identified starting point.

9. The UE of claim 7,
wherein the bandwidth for the SRS includes up to 272 resource blocks, RB.

10. A base station operable within a wireless communication system, the base station comprising:
a transceiver (810); and
at least one processor (820) operably connected to the transceiver (810) and configured to control the transceiver (810) to:
receive, from a user equipment, UE, information on a bandwidth supported by the UE,
transmit, to the UE, a first parameter and a second parameter by higher layer signaling, and
receive, from the UE, sounding reference signal, SRS, based on a bandwidth for the SRS, the bandwidth being identified based on the first parameter and the second parameter wherein the first parameter and the second parameter comprise UE-specific parameters,
wherein the first parameter indicates UE-specific SRS bandwidth is a UE-specific parameter, BSRS, and the second parameter indicates an SRS bandwidth configuration, CSRS,
wherein a first value, BSRS=1, BSRS=2, or BSRS=3, of the first parameter indicates a first bandwidth set not including 272 resource blocks, RB, and a second value, BSRS=0, of the first parameter indicates a second bandwidth set including 272 RB in a predetermined table,
wherein values corresponding to mSRS and n of (BSRS= n) are selected as values that can be expressed as multiplication of Nn+1 and (mSRS,n+1) of (BSRS= n+1)
wherein the first bandwidth set does not include a part of the second bandwidth set less than 272 RB,
wherein the predetermined table is:
| | BSRS = 0 | | BSRS = 1 | | BSRS = 2 | | BSRS = 3 | |
|---|---|---|---|---|---|---|---|---|
| CSRS | mSRS,0 | N0 | mSRS,1 | N1 | mSRS,2 | N2 | mSRS,3 | N3 |
| 0 | 4 | 1 | 4 | 1 | 4 | 1 | 4 | 1 |
| 1 | 8 | 1 | 4 | 2 | 4 | 1 | 4 | 1 |
| 2 | 12 | 1 | 4 | 3 | 4 | 1 | 4 | 1 |
| 3 | 16 | 1 | 4 | 4 | 4 | 1 | 4 | 1 |
| 4 | 16 | 1 | 8 | 2 | 4 | 2 | 4 | 1 |
| 5 | 20 | 1 | 4 | 5 | 4 | 1 | 4 | 1 |
| 6 | 24 | 1 | 4 | 6 | 4 | 1 | 4 | 1 |
| 7 | 24 | 1 | 12 | 2 | 4 | 3 | 4 | 1 |
| 8 | 28 | 1 | 4 | 7 | 4 | 1 | 4 | 1 |
| 9 | 32 | 1 | 16 | 2 | 8 | 2 | 4 | 2 |
| 10 | 36 | 1 | 12 | 3 | 4 | 3 | 4 | 1 |
| 11 | 40 | 1 | 20 | 2 | 4 | 5 | 4 | 1 |
| 12 | 48 | 1 | 16 | 3 | 8 | 2 | 4 | 2 |
| 13 | 48 | 1 | 24 | 2 | 12 | 2 | 4 | 3 |
| 14 | 52 | 1 | 4 | 13 | 4 | 1 | 4 | 1 |
| 15 | 56 | 1 | 28 | 2 | 4 | 7 | 4 | 1 |
| 16 | 60 | 1 | 20 | 3 | 4 | 5 | 4 | 1 |
| 17 | 64 | 1 | 32 | 2 | 16 | 2 | 4 | 4 |
| 18 | 72 | 1 | 24 | 3 | 12 | 2 | 4 | 3 |
| 19 | 72 | 1 | 36 | 2 | 12 | 3 | 4 | 3 |
| 20 | 76 | 1 | 4 | 19 | 4 | 1 | 4 | 1 |
| 21 | 80 | 1 | 40 | 2 | 20 | 2 | 4 | 5 |
| 22 | 88 | 1 | 44 | 2 | 4 | 11 | 4 | 1 |
| 23 | 96 | 1 | 32 | 3 | 16 | 2 | 4 | 4 |
| 24 | 96 | 1 | 48 | 2 | 24 | 2 | 4 | 6 |
| 25 | 104 | 1 | 52 | 2 | 4 | 13 | 4 | 1 |
| 26 | 112 | 1 | 56 | 2 | 28 | 2 | 4 | 7 |
| 27 | 120 | 1 | 60 | 2 | 20 | 3 | 4 | 5 |
| 28 | 120 | 1 | 40 | 3 | 8 | 5 | 4 | 2 |
| 29 | 120 | 1 | 24 | 5 | 12 | 2 | 4 | 3 |
| 30 | 128 | 1 | 64 | 2 | 32 | 2 | 4 | 8 |
| 31 | 128 | 1 | 64 | 2 | 16 | 4 | 4 | 4 |
| 32 | 128 | 1 | 16 | 8 | 8 | 2 | 4 | 2 |
| 33 | 132 | 1 | 44 | 3 | 4 | 11 | 4 | 1 |
| 34 | 136 | 1 | 68 | 2 | 4 | 17 | 4 | 1 |
| 35 | 144 | 1 | 72 | 2 | 36 | 2 | 4 | 9 |
| 36 | 144 | 1 | 48 | 3 | 24 | 2 | 12 | 2 |
| 37 | 144 | 1 | 48 | 3 | 16 | 3 | 4 | 4 |
| 38 | 144 | 1 | 16 | 9 | 8 | 2 | 4 | 2 |
| 39 | 152 | 1 | 76 | 2 | 4 | 19 | 4 | 1 |
| 40 | 160 | 1 | 80 | 2 | 40 | 2 | 4 | 10 |
| 41 | 160 | 1 | 80 | 2 | 20 | 4 | 4 | 5 |
| 42 | 160 | 1 | 32 | 5 | 16 | 2 | 4 | 4 |
| 43 | 168 | 1 | 84 | 2 | 28 | 3 | 4 | 7 |
| 44 | 176 | 1 | 88 | 2 | 44 | 2 | 4 | 11 |
| 45 | 184 | 1 | 92 | 2 | 4 | 23 | 4 | 1 |
| 46 | 192 | 1 | 96 | 2 | 48 | 2 | 4 | 12 |
| 47 | 192 | 1 | 96 | 2 | 24 | 4 | 4 | 6 |
| 48 | 192 | 1 | 64 | 3 | 16 | 4 | 4 | 4 |
| 49 | 192 | 1 | 24 | 8 | 8 | 3 | 4 | 2 |
| 50 | 208 | 1 | 104 | 2 | 52 | 2 | 4 | 13 |
| 51 | 216 | 1 | 108 | 2 | 36 | 3 | 4 | 9 |
| 52 | 224 | 1 | 112 | 2 | 56 | 2 | 4 | 14 |
| 53 | 240 | 1 | 120 | 2 | 60 | 2 | 4 | 15 |
| 54 | 240 | 1 | 80 | 3 | 20 | 4 | 4 | 5 |
| 55 | 240 | 1 | 48 | 5 | 16 | 3 | 8 | 2 |
| 56 | 240 | 1 | 24 | 10 | 12 | 2 | 4 | 3 |
| 57 | 256 | 1 | 128 | 2 | 64 | 2 | 4 | 16 |
| 58 | 256 | 1 | 128 | 2 | 32 | 4 | 4 | 8 |
| 59 | 256 | 1 | 16 | 16 | 8 | 2 | 4 | 2 |
| 60 | 264 | 1 | 132 | 2 | 44 | 3 | 4 | 11 |
| 61 | 272 | 1 | 136 | 2 | 68 | 2 | 4 | 17 |
| 62 | 272 | 1 | 68 | 4 | 4 | 17 | 4 | 1 |
| 63 | 272 | 1 | 16 | 17 | 8 | 2 | 4 | 2 |

11. The base station of claim 10,
wherein the at least one processor (820) is further configured to control the transceiver (810) to transmit, to the UE, offset information by higher layer signaling, the offset information being based on a common resource block, and
wherein the SRS is received based on the bandwidth and a starting point for the bandwidth, the starting point being identified based on the offset information.

## Patentansprüche

1. Verfahren für ein Benutzergerät (UE) in einem drahtlosen Kommunikationssystem, wobei das Verfahren Folgendes umfasst:
Übertragen von Informationen über eine vom UE unterstützte Bandbreite an eine Basisstation;
Empfangen eines ersten Parameters und eines zweiten Parameters, die mit einem Sondierungsreferenzsignal, SRS, verbunden sind, von der Basisstation durch Signalisierung einer höheren Schicht, wobei der erste Parameter und der zweite Parameter UE-spezifische Parameter umfassen;
Identifizieren einer Bandbreite für das SRS auf der Grundlage des ersten Parameters und des zweiten Parameters; und
Übertragen des SRS an die Basisstation auf der Grundlage der identifizierten Bandbreite für das SRS,
wobei der erste Parameter die UE-spezifische SRS-Bandbreite, BSRS, angibt und der zweite Parameter eine SRS-Bandbreitenkonfiguration, CSRS, angibt,
wobei ein erster Wert, BSRS=1, BSRS=2 oder BSRS=3, des ersten Parameters einen ersten Bandbreitensatz anzeigt, der keine 272 Ressourcenblöcke, RB, enthält, und ein zweiter Wert, BSRS=0, des ersten Parameters einen zweiten Bandbreitensatz anzeigt, der 272 RB in einer vorgegebenen Tabelle enthält,
wobei die Werte, die mSRS und n von (BSRS= n) entsprechen, ausgewählt werden als
Werte, die als Multiplikation von Nn+1 und (mSRS,n+1) von (BSRS= n+1) ausgedrückt werden können
und
wobei der erste Bandbreitensatz keinen Teil des zweiten Bandbreitensatzes enthält, der kleiner als 272 RB ist,
wobei die vorgegebene Tabelle ist:
| | BSRS = 0 | | BSRS = 1 | | BSRS = 2 | | BSRS = 3 | |
|---|---|---|---|---|---|---|---|---|
| CSRS | mSRS,0 | N0 | mSRS,1 | N1 | mSRS,2 | N2 | mSRS,3 | N3 |
| 0 | 4 | 1 | 4 | 1 | 4 | 1 | 4 | 1 |
| 1 | 8 | 1 | 4 | 2 | 4 | 1 | 4 | 1 |
| 2 | 12 | 1 | 4 | 3 | 4 | 1 | 4 | 1 |
| 3 | 16 | 1 | 4 | 4 | 4 | 1 | 4 | 1 |
| 4 | 16 | 1 | 8 | 2 | 4 | 2 | 4 | 1 |
| 5 | 20 | 1 | 4 | 5 | 4 | 1 | 4 | 1 |
| 6 | 24 | 1 | 4 | 6 | 4 | 1 | 4 | 1 |
| 7 | 24 | 1 | 12 | 2 | 4 | 3 | 4 | 1 |
| 8 | 28 | 1 | 4 | 7 | 4 | 1 | 4 | 1 |
| 9 | 32 | 1 | 16 | 2 | 8 | 2 | 4 | 2 |
| 10 | 36 | 1 | 12 | 3 | 4 | 3 | 4 | 1 |
| 11 | 40 | 1 | 20 | 2 | 4 | 5 | 4 | 1 |
| 12 | 48 | 1 | 16 | 3 | 8 | 2 | 4 | 2 |
| 13 | 48 | 1 | 24 | 2 | 12 | 2 | 4 | 3 |
| 14 | 52 | 1 | 4 | 13 | 4 | 1 | 4 | 1 |
| 15 | 56 | 1 | 28 | 2 | 4 | 7 | 4 | 1 |
| 16 | 60 | 1 | 20 | 3 | 4 | 5 | 4 | 1 |
| 17 | 64 | 1 | 32 | 2 | 16 | 2 | 4 | 4 |
| 18 | 72 | 1 | 24 | 3 | 12 | 2 | 4 | 3 |
| 19 | 72 | 1 | 36 | 2 | 12 | 3 | 4 | 3 |
| 20 | 76 | 1 | 4 | 19 | 4 | 1 | 4 | 1 |
| 21 | 80 | 1 | 40 | 2 | 20 | 2 | 4 | 5 |
| 22 | 88 | 1 | 44 | 2 | 4 | 11 | 4 | 1 |
| 23 | 96 | 1 | 32 | 3 | 16 | 2 | 4 | 4 |
| 24 | 96 | 1 | 48 | 2 | 24 | 2 | 4 | 6 |
| 25 | 104 | 1 | 52 | 2 | 4 | 13 | 4 | 1 |
| 26 | 112 | 1 | 56 | 2 | 28 | 2 | 4 | 7 |
| 27 | 120 | 1 | 60 | 2 | 20 | 3 | 4 | 5 |
| 28 | 120 | 1 | 40 | 3 | 8 | 5 | 4 | 2 |
| 29 | 120 | 1 | 24 | 5 | 12 | 2 | 4 | 3 |
| 30 | 128 | 1 | 64 | 2 | 32 | 2 | 4 | 8 |
| 31 | 128 | 1 | 64 | 2 | 16 | 4 | 4 | 4 |
| 32 | 128 | 1 | 16 | 8 | 8 | 2 | 4 | 2 |
| 33 | 132 | 1 | 44 | 3 | 4 | 11 | 4 | 1 |
| 34 | 136 | 1 | 68 | 2 | 4 | 17 | 4 | 1 |
| 35 | 144 | 1 | 72 | 2 | 36 | 2 | 4 | 9 |
| 36 | 144 | 1 | 48 | 3 | 24 | 2 | 12 | 2 |
| 37 | 144 | 1 | 48 | 3 | 16 | 3 | 4 | 4 |
| 38 | 144 | 1 | 16 | 9 | 8 | 2 | 4 | 2 |
| 39 | 152 | 1 | 76 | 2 | 4 | 19 | 4 | 1 |
| 40 | 160 | 1 | 80 | 2 | 40 | 2 | 4 | 10 |
| 41 | 160 | 1 | 80 | 2 | 20 | 4 | 4 | 5 |
| 42 | 160 | 1 | 32 | 5 | 16 | 2 | 4 | 4 |
| 43 | 168 | 1 | 84 | 2 | 28 | 3 | 4 | 7 |
| 44 | 176 | 1 | 88 | 2 | 44 | 2 | 4 | 11 |
| 45 | 184 | 1 | 92 | 2 | 4 | 23 | 4 | 1 |
| 46 | 192 | 1 | 96 | 2 | 48 | 2 | 4 | 12 |
| 47 | 192 | 1 | 96 | 2 | 24 | 4 | 4 | 6 |
| 48 | 192 | 1 | 64 | 3 | 16 | 4 | 4 | 4 |
| 49 | 192 | 1 | 24 | 8 | 8 | 3 | 4 | 2 |
| 50 | 208 | 1 | 104 | 2 | 52 | 2 | 4 | 13 |
| 51 | 216 | 1 | 108 | 2 | 36 | 3 | 4 | 9 |
| 52 | 224 | 1 | 112 | 2 | 56 | 2 | 4 | 14 |
| 53 | 240 | 1 | 120 | 2 | 60 | 2 | 4 | 15 |
| 54 | 240 | 1 | 80 | 3 | 20 | 4 | 4 | 5 |
| 55 | 240 | 1 | 48 | 5 | 16 | 3 | 8 | 2 |
| 56 | 240 | 1 | 24 | 10 | 12 | 2 | 4 | 3 |
| 57 | 256 | 1 | 128 | 2 | 64 | 2 | 4 | 16 |
| 58 | 256 | 1 | 128 | 2 | 32 | 4 | 4 | 8 |
| 59 | 256 | 1 | 16 | 16 | 8 | 2 | 4 | 2 |
| 60 | 264 | 1 | 132 | 2 | 44 | 3 | 4 | 11 |
| 61 | 272 | 1 | 136 | 2 | 68 | 2 | 4 | 17 |
| 62 | 272 | 1 | 68 | 4 | 4 | 17 | 4 | 1 |
| 63 | 272 | 1 | 16 | 17 | 8 | 2 | 4 | 2 |

2. Verfahren nach Anspruch 1, das ferner umfasst:
Empfangen von Offset-Informationen von der Basisstation durch Signalisierung einer höheren Schicht, wobei die Offset-Informationen auf einem gemeinsamen Ressourcenblock basieren; und
Identifizieren eines Startpunkts für die Bandbreite auf der Grundlage der Offset-Informationen,
wobei das SRS auf der Grundlage der Bandbreite und des identifizierten Startpunkts übertragen wird.

3. Verfahren nach Anspruch 1,
wobei die Bandbreite für das SRS bis zu 272 Ressourcenblöcke, RB, umfasst.

4. Verfahren für eine Basisstation in einem drahtlosen Kommunikationssystem, wobei das Verfahren Folgendes umfasst
Empfangen von Informationen, von einem Benutzergerät, UE, über eine vom UE unterstützte Bandbreite;
Übertragen eines ersten Parameters und eines zweiten Parameters, die mit einem Sondierungsreferenzsignal, SRS, verbunden sind, an das UE durch Signalisierung einer höheren Schicht, wobei der erste Parameter und der zweite Parameter UE-spezifische Parameter umfassen; und
Empfangen des SRS von dem UE auf der Grundlage einer Bandbreite für das SRS, wobei die Bandbreite auf der Grundlage des ersten Parameters und des zweiten Parameters identifiziert wird,
wobei der erste Parameter, der die UE-spezifische SRS-Bandbreite angibt, ein UE-spezifischer Parameter, BSRS, ist und der zweite Parameter eine SRS-Bandbreitenkonfiguration, CSRS, angibt,
wobei ein erster Wert, BSRS=1, BSRS=2 oder BSRS=3, des ersten Parameters einen ersten Bandbreitensatz anzeigt, der keine 272 Ressourcenblöcke, RB, enthält, und ein zweiter Wert, BSRS=0, des ersten Parameters einen zweiten Bandbreitensatz anzeigt, der 272 RB in einer vorgegebenen Tabelle enthält,
wobei die Werte, die mSRS und n von (BSRS= n) entsprechen, ausgewählt werden als
Werte, die als Multiplikation von Nn+1 und (mSRS,n+1) von (BSRS= n+1) ausgedrückt werden können, und
wobei der erste Bandbreitensatz keinen Teil des zweiten Bandbreitensatzes mit weniger als 272 RB enthält
wobei die vorgegebene Tabelle ist:
| | BSRS = 0 | | BSRS = 1 | | BSRS = 2 | | BSRS = 3 | |
|---|---|---|---|---|---|---|---|---|
| CSRS | mSRS,0 | N0 | mSRS,1 | N1 | mSRS,2 | N2 | mSRS,3 | N3 |
| 0 | 4 | 1 | 4 | 1 | 4 | 1 | 4 | 1 |
| 1 | 8 | 1 | 4 | 2 | 4 | 1 | 4 | 1 |
| 2 | 12 | 1 | 4 | 3 | 4 | 1 | 4 | 1 |
| 3 | 16 | 1 | 4 | 4 | 4 | 1 | 4 | 1 |
| 4 | 16 | 1 | 8 | 2 | 4 | 2 | 4 | 1 |
| 5 | 20 | 1 | 4 | 5 | 4 | 1 | 4 | 1 |
| 6 | 24 | 1 | 4 | 6 | 4 | 1 | 4 | 1 |
| 7 | 24 | 1 | 12 | 2 | 4 | 3 | 4 | 1 |
| 8 | 28 | 1 | 4 | 7 | 4 | 1 | 4 | 1 |
| 9 | 32 | 1 | 16 | 2 | 8 | 2 | 4 | 2 |
| 10 | 36 | 1 | 12 | 3 | 4 | 3 | 4 | 1 |
| 11 | 40 | 1 | 20 | 2 | 4 | 5 | 4 | 1 |
| 12 | 48 | 1 | 16 | 3 | 8 | 2 | 4 | 2 |
| 13 | 48 | 1 | 24 | 2 | 12 | 2 | 4 | 3 |
| 14 | 52 | 1 | 4 | 13 | 4 | 1 | 4 | 1 |
| 15 | 56 | 1 | 28 | 2 | 4 | 7 | 4 | 1 |
| 16 | 60 | 1 | 20 | 3 | 4 | 5 | 4 | 1 |
| 17 | 64 | 1 | 32 | 2 | 16 | 2 | 4 | 4 |
| 18 | 72 | 1 | 24 | 3 | 12 | 2 | 4 | 3 |
| 19 | 72 | 1 | 36 | 2 | 12 | 3 | 4 | 3 |
| 20 | 76 | 1 | 4 | 19 | 4 | 1 | 4 | 1 |
| 21 | 80 | 1 | 40 | 2 | 20 | 2 | 4 | 5 |
| 22 | 88 | 1 | 44 | 2 | 4 | 11 | 4 | 1 |
| 23 | 96 | 1 | 32 | 3 | 16 | 2 | 4 | 4 |
| 24 | 96 | 1 | 48 | 2 | 24 | 2 | 4 | 6 |
| 25 | 104 | 1 | 52 | 2 | 4 | 13 | 4 | 1 |
| 26 | 112 | 1 | 56 | 2 | 28 | 2 | 4 | 7 |
| 27 | 120 | 1 | 60 | 2 | 20 | 3 | 4 | 5 |
| 28 | 120 | 1 | 40 | 3 | 8 | 5 | 4 | 2 |
| 29 | 120 | 1 | 24 | 5 | 12 | 2 | 4 | 3 |
| 30 | 128 | 1 | 64 | 2 | 32 | 2 | 4 | 8 |
| 31 | 128 | 1 | 64 | 2 | 16 | 4 | 4 | 4 |
| 32 | 128 | 1 | 16 | 8 | 8 | 2 | 4 | 2 |
| 33 | 132 | 1 | 44 | 3 | 4 | 11 | 4 | 1 |
| 34 | 136 | 1 | 68 | 2 | 4 | 17 | 4 | 1 |
| 35 | 144 | 1 | 72 | 2 | 36 | 2 | 4 | 9 |
| 36 | 144 | 1 | 48 | 3 | 24 | 2 | 12 | 2 |
| 37 | 144 | 1 | 48 | 3 | 16 | 3 | 4 | 4 |
| 38 | 144 | 1 | 16 | 9 | 8 | 2 | 4 | 2 |
| 39 | 152 | 1 | 76 | 2 | 4 | 19 | 4 | 1 |
| 40 | 160 | 1 | 80 | 2 | 40 | 2 | 4 | 10 |
| 41 | 160 | 1 | 80 | 2 | 20 | 4 | 4 | 5 |
| 42 | 160 | 1 | 32 | 5 | 16 | 2 | 4 | 4 |
| 43 | 168 | 1 | 84 | 2 | 28 | 3 | 4 | 7 |
| 44 | 176 | 1 | 88 | 2 | 44 | 2 | 4 | 11 |
| 45 | 184 | 1 | 92 | 2 | 4 | 23 | 4 | 1 |
| 46 | 192 | 1 | 96 | 2 | 48 | 2 | 4 | 12 |
| 47 | 192 | 1 | 96 | 2 | 24 | 4 | 4 | 6 |
| 48 | 192 | 1 | 64 | 3 | 16 | 4 | 4 | 4 |
| 49 | 192 | 1 | 24 | 8 | 8 | 3 | 4 | 2 |
| 50 | 208 | 1 | 104 | 2 | 52 | 2 | 4 | 13 |
| 51 | 216 | 1 | 108 | 2 | 36 | 3 | 4 | 9 |
| 52 | 224 | 1 | 112 | 2 | 56 | 2 | 4 | 14 |
| 53 | 240 | 1 | 120 | 2 | 60 | 2 | 4 | 15 |
| 54 | 240 | 1 | 80 | 3 | 20 | 4 | 4 | 5 |
| 55 | 240 | 1 | 48 | 5 | 16 | 3 | 8 | 2 |
| 56 | 240 | 1 | 24 | 10 | 12 | 2 | 4 | 3 |
| 57 | 256 | 1 | 128 | 2 | 64 | 2 | 4 | 16 |
| 58 | 256 | 1 | 128 | 2 | 32 | 4 | 4 | 8 |
| 59 | 256 | 1 | 16 | 16 | 8 | 2 | 4 | 2 |
| 60 | 264 | 1 | 132 | 2 | 44 | 3 | 4 | 11 |
| 61 | 272 | 1 | 136 | 2 | 68 | 2 | 4 | 17 |
| 62 | 272 | 1 | 68 | 4 | 4 | 17 | 4 | 1 |
| 63 | 272 | 1 | 16 | 17 | 8 | 2 | 4 | 2 |

5. Verfahren nach Anspruch 4, das ferner umfasst:
Übertragen von Offset-Informationen an das UE durch Signalisierung einer höheren Schicht, wobei die Offset-Informationen auf einem gemeinsamen Ressourcenblock basieren,
wobei das SRS basierend auf der Bandbreite und einem Startpunkt für die Bandbreite empfangen wird, wobei der Startpunkt basierend auf den Offset-Informationen identifiziert wird.

6. Verfahren nach Anspruch 4,
wobei die Bandbreite für das SRS bis zu 272 Ressourcenblöcke, RB, umfasst.

7. Benutzergerät, UE, das in einem drahtlosen Kommunikationssystem betrieben werden kann, wobei das UE Folgendes umfasst:
einen Transceiver (910); und
mindestens einen Prozessor (920), der betriebsfähig mit dem Transceiver (910) verbunden und konfiguriert ist, um:
den Transceiver (910) so zu steuern, dass er Informationen über eine vom UE unterstützte Bandbreite an eine Basisstation sendet,
den Transceiver (910) zu steuern, um von der Basisstation einen ersten Parameter und einen zweiten Parameter zu empfangen, die mit einem Sondierungsreferenzsignal, SRS, durch Signalisierung einer höheren Schicht verbunden sind, wobei der erste Parameter und der zweite Parameter UE-spezifische Parameter umfassen,
eine Bandbreite für das SRS auf der Grundlage des ersten Parameters und des zweiten Parameters zu identifizieren, und
den Transceiver (910) zu steuern, um das SRS auf der Grundlage der identifizierten Bandbreite für das SRS an die Basisstation zu übertragen,
wobei der erste Parameter die UE-spezifische SRS-Bandbreite angibt, ein UE-spezifischer Parameter, BSRS, ist und der zweite Parameter eine SRS-Bandbreitenkonfiguration, CSRS, angibt,
wobei ein erster Wert, BSRS=1, BSRS=2 oder BSRS=3, des ersten Parameters einen ersten Bandbreitensatz anzeigt, der keine 272 Ressourcenblöcke, RB, enthält, und ein zweiter Wert, BSRS=0, des ersten Parameters einen zweiten Bandbreitensatz anzeigt, der 272 RB in einer vorgegebenen Tabelle enthält,
wobei die Werte, die mSRS und n von (BSRS= n) entsprechen, ausgewählt werden als
Werte, die als Multiplikation von Nn+1 und (mSRS,n+1) von (BSRS= n+1) ausgedrückt werden können, und
wobei der erste Bandbreitensatz keinen Teil des zweiten Bandbreitensatzes mit weniger als 272 RB enthält,
wobei die vorgegebene Tabelle ist:
| | BSRS = 0 | | BSRS = 1 | | BSRS = 2 | | BSRS = 3 | |
|---|---|---|---|---|---|---|---|---|
| CSRS | mSRS,0 | N0 | mSRS,1 | N1 | mSRS,2 | N2 | mSRS,3 | N3 |
| 0 | 4 | 1 | 4 | 1 | 4 | 1 | 4 | 1 |
| 1 | 8 | 1 | 4 | 2 | 4 | 1 | 4 | 1 |
| 2 | 12 | 1 | 4 | 3 | 4 | 1 | 4 | 1 |
| 3 | 16 | 1 | 4 | 4 | 4 | 1 | 4 | 1 |
| 4 | 16 | 1 | 8 | 2 | 4 | 2 | 4 | 1 |
| 5 | 20 | 1 | 4 | 5 | 4 | 1 | 4 | 1 |
| 6 | 24 | 1 | 4 | 6 | 4 | 1 | 4 | 1 |
| 7 | 24 | 1 | 12 | 2 | 4 | 3 | 4 | 1 |
| 8 | 28 | 1 | 4 | 7 | 4 | 1 | 4 | 1 |
| 9 | 32 | 1 | 16 | 2 | 8 | 2 | 4 | 2 |
| 10 | 36 | 1 | 12 | 3 | 4 | 3 | 4 | 1 |
| 11 | 40 | 1 | 20 | 2 | 4 | 5 | 4 | 1 |
| 12 | 48 | 1 | 16 | 3 | 8 | 2 | 4 | 2 |
| 13 | 48 | 1 | 24 | 2 | 12 | 2 | 4 | 3 |
| 14 | 52 | 1 | 4 | 13 | 4 | 1 | 4 | 1 |
| 15 | 56 | 1 | 28 | 2 | 4 | 7 | 4 | 1 |
| 16 | 60 | 1 | 20 | 3 | 4 | 5 | 4 | 1 |
| 17 | 64 | 1 | 32 | 2 | 16 | 2 | 4 | 4 |
| 18 | 72 | 1 | 24 | 3 | 12 | 2 | 4 | 3 |
| 19 | 72 | 1 | 36 | 2 | 12 | 3 | 4 | 3 |
| 20 | 76 | 1 | 4 | 19 | 4 | 1 | 4 | 1 |
| 21 | 80 | 1 | 40 | 2 | 20 | 2 | 4 | 5 |
| 22 | 88 | 1 | 44 | 2 | 4 | 11 | 4 | 1 |
| 23 | 96 | 1 | 32 | 3 | 16 | 2 | 4 | 4 |
| 24 | 96 | 1 | 48 | 2 | 24 | 2 | 4 | 6 |
| 25 | 104 | 1 | 52 | 2 | 4 | 13 | 4 | 1 |
| 26 | 112 | 1 | 56 | 2 | 28 | 2 | 4 | 7 |
| 27 | 120 | 1 | 60 | 2 | 20 | 3 | 4 | 5 |
| 28 | 120 | 1 | 40 | 3 | 8 | 5 | 4 | 2 |
| 29 | 120 | 1 | 24 | 5 | 12 | 2 | 4 | 3 |
| 30 | 128 | 1 | 64 | 2 | 32 | 2 | 4 | 8 |
| 31 | 128 | 1 | 64 | 2 | 16 | 4 | 4 | 4 |
| 32 | 128 | 1 | 16 | 8 | 8 | 2 | 4 | 2 |
| 33 | 132 | 1 | 44 | 3 | 4 | 11 | 4 | 1 |
| 34 | 136 | 1 | 68 | 2 | 4 | 17 | 4 | 1 |
| 35 | 144 | 1 | 72 | 2 | 36 | 2 | 4 | 9 |
| 36 | 144 | 1 | 48 | 3 | 24 | 2 | 12 | 2 |
| 37 | 144 | 1 | 48 | 3 | 16 | 3 | 4 | 4 |
| 38 | 144 | 1 | 16 | 9 | 8 | 2 | 4 | 2 |
| 39 | 152 | 1 | 76 | 2 | 4 | 19 | 4 | 1 |
| 40 | 160 | 1 | 80 | 2 | 40 | 2 | 4 | 10 |
| 41 | 160 | 1 | 80 | 2 | 20 | 4 | 4 | 5 |
| 42 | 160 | 1 | 32 | 5 | 16 | 2 | 4 | 4 |
| 43 | 168 | 1 | 84 | 2 | 28 | 3 | 4 | 7 |
| 44 | 176 | 1 | 88 | 2 | 44 | 2 | 4 | 11 |
| 45 | 184 | 1 | 92 | 2 | 4 | 23 | 4 | 1 |
| 46 | 192 | 1 | 96 | 2 | 48 | 2 | 4 | 12 |
| 47 | 192 | 1 | 96 | 2 | 24 | 4 | 4 | 6 |
| 48 | 192 | 1 | 64 | 3 | 16 | 4 | 4 | 4 |
| 49 | 192 | 1 | 24 | 8 | 8 | 3 | 4 | 2 |
| 50 | 208 | 1 | 104 | 2 | 52 | 2 | 4 | 13 |
| 51 | 216 | 1 | 108 | 2 | 36 | 3 | 4 | 9 |
| 52 | 224 | 1 | 112 | 2 | 56 | 2 | 4 | 14 |
| 53 | 240 | 1 | 120 | 2 | 60 | 2 | 4 | 15 |
| 54 | 240 | 1 | 80 | 3 | 20 | 4 | 4 | 5 |
| 55 | 240 | 1 | 48 | 5 | 16 | 3 | 8 | 2 |
| 56 | 240 | 1 | 24 | 10 | 12 | 2 | 4 | 3 |
| 57 | 256 | 1 | 128 | 2 | 64 | 2 | 4 | 16 |
| 58 | 256 | 1 | 128 | 2 | 32 | 4 | 4 | 8 |
| 59 | 256 | 1 | 16 | 16 | 8 | 2 | 4 | 2 |
| 60 | 264 | 1 | 132 | 2 | 44 | 3 | 4 | 11 |
| 61 | 272 | 1 | 136 | 2 | 68 | 2 | 4 | 17 |
| 62 | 272 | 1 | 68 | 4 | 4 | 17 | 4 | 1 |
| 63 | 272 | 1 | 16 | 17 | 8 | 2 | 4 | 2 |

8. UE nach Anspruch 7,
wobei der mindestens eine Prozessor (920) ferner konfiguriert ist zum::
Steuern des Transceivers zum Empfangen von Offset-Informationen von der Basisstation durch Signalisierung einer höheren Schicht, wobei die Offset-Informationen auf einem gemeinsamen Ressourcenblock basieren, und
Identifizieren eines Startpunkts für die Bandbreite auf der Grundlage der Offset-Informationen, und
wobei das SRS auf der Grundlage der Bandbreite und des identifizierten Startpunkts übertragen wird.

9. UE nach Anspruch 7,
wobei die Bandbreite für das SRS bis zu 272 Ressourcenblöcke, RB, umfasst.

10. Basisstation, die innerhalb eines drahtlosen Kommunikationssystems betrieben werden kann, wobei die Basisstation umfasst:
einen Transceiver (810); und
mindestens einen Prozessor (820), der betriebsfähig mit dem Transceiver (810) verbunden ist und so konfiguriert ist, dass er den Transceiver (810) steuert, um:
von einem Benutzergerät, UE, Informationen über eine vom UE unterstützte Bandbreite zu empfangen,
einen ersten Parameter und einen zweiten Parameter an das UE durch Signalisierung einer höheren Schicht zu übertragen, und
von dem UE ein Sondierungsreferenzsignal, SRS, basierend auf einer Bandbreite für das SRS zu empfangen, wobei die Bandbreite basierend auf dem ersten Parameter und dem zweiten Parameter identifiziert wird, wobei der erste Parameter und der zweite Parameter UE-spezifische Parameter umfassen,
wobei der erste Parameter die UE-spezifische SRS-Bandbreite angibt, ein UE-spezifischer Parameter, BSRS, ist und der zweite Parameter eine SRS-Bandbreitenkonfiguration, CSRS, angibt,
wobei ein erster Wert, BSRS=1, BSRS=2 oder BSRS=3, des ersten Parameters einen ersten Bandbreitensatz anzeigt, der keine 272 Ressourcenblöcke, RB, enthält, und ein zweiter Wert, BSRS=0, des ersten Parameters einen zweiten Bandbreitensatz anzeigt, der 272 RB in einer vorgegebenen Tabelle enthält,
wobei die Werte, die mSRS und n von (BSRS= n) entsprechen, ausgewählt werden als
Werte, die als Multiplikation von Nn+1 und (mSRS,n+1) von (BSRS= n+1) ausgedrückt werden können, und
wobei der erste Bandbreitensatz keinen Teil des zweiten Bandbreitensatzes mit weniger als 272 RB enthält,
wobei die vorgegebene Tabelle ist:
| | BSRS = 0 | | BSRS = 1 | | BSRS = 2 | | BSRS = 3 | |
|---|---|---|---|---|---|---|---|---|
| CSRS | mSRS,0 | N0 | mSRS,1 | N1 | mSRS,2 | N2 | mSRS,3 | N3 |
| 0 | 4 | 1 | 4 | 1 | 4 | 1 | 4 | 1 |
| 1 | 8 | 1 | 4 | 2 | 4 | 1 | 4 | 1 |
| 2 | 12 | 1 | 4 | 3 | 4 | 1 | 4 | 1 |
| 3 | 16 | 1 | 4 | 4 | 4 | 1 | 4 | 1 |
| 4 | 16 | 1 | 8 | 2 | 4 | 2 | 4 | 1 |
| 5 | 20 | 1 | 4 | 5 | 4 | 1 | 4 | 1 |
| 6 | 24 | 1 | 4 | 6 | 4 | 1 | 4 | 1 |
| 7 | 24 | 1 | 12 | 2 | 4 | 3 | 4 | 1 |
| 8 | 28 | 1 | 4 | 7 | 4 | 1 | 4 | 1 |
| 9 | 32 | 1 | 16 | 2 | 8 | 2 | 4 | 2 |
| 10 | 36 | 1 | 12 | 3 | 4 | 3 | 4 | 1 |
| 11 | 40 | 1 | 20 | 2 | 4 | 5 | 4 | 1 |
| 12 | 48 | 1 | 16 | 3 | 8 | 2 | 4 | 2 |
| 13 | 48 | 1 | 24 | 2 | 12 | 2 | 4 | 3 |
| 14 | 52 | 1 | 4 | 13 | 4 | 1 | 4 | 1 |
| 15 | 56 | 1 | 28 | 2 | 4 | 7 | 4 | 1 |
| 16 | 60 | 1 | 20 | 3 | 4 | 5 | 4 | 1 |
| 17 | 64 | 1 | 32 | 2 | 16 | 2 | 4 | 4 |
| 18 | 72 | 1 | 24 | 3 | 12 | 2 | 4 | 3 |
| 19 | 72 | 1 | 36 | 2 | 12 | 3 | 4 | 3 |
| 20 | 76 | 1 | 4 | 19 | 4 | 1 | 4 | 1 |
| 21 | 80 | 1 | 40 | 2 | 20 | 2 | 4 | 5 |
| 22 | 88 | 1 | 44 | 2 | 4 | 11 | 4 | 1 |
| 23 | 96 | 1 | 32 | 3 | 16 | 2 | 4 | 4 |
| 24 | 96 | 1 | 48 | 2 | 24 | 2 | 4 | 6 |
| 25 | 104 | 1 | 52 | 2 | 4 | 13 | 4 | 1 |
| 26 | 112 | 1 | 56 | 2 | 28 | 2 | 4 | 7 |
| 27 | 120 | 1 | 60 | 2 | 20 | 3 | 4 | 5 |
| 28 | 120 | 1 | 40 | 3 | 8 | 5 | 4 | 2 |
| 29 | 120 | 1 | 24 | 5 | 12 | 2 | 4 | 3 |
| 30 | 128 | 1 | 64 | 2 | 32 | 2 | 4 | 8 |
| 31 | 128 | 1 | 64 | 2 | 16 | 4 | 4 | 4 |
| 32 | 128 | 1 | 16 | 8 | 8 | 2 | 4 | 2 |
| 33 | 132 | 1 | 44 | 3 | 4 | 11 | 4 | 1 |
| 34 | 136 | 1 | 68 | 2 | 4 | 17 | 4 | 1 |
| 35 | 144 | 1 | 72 | 2 | 36 | 2 | 4 | 9 |
| 36 | 144 | 1 | 48 | 3 | 24 | 2 | 12 | 2 |
| 37 | 144 | 1 | 48 | 3 | 16 | 3 | 4 | 4 |
| 38 | 144 | 1 | 16 | 9 | 8 | 2 | 4 | 2 |
| 39 | 152 | 1 | 76 | 2 | 4 | 19 | 4 | 1 |
| 40 | 160 | 1 | 80 | 2 | 40 | 2 | 4 | 10 |
| 41 | 160 | 1 | 80 | 2 | 20 | 4 | 4 | 5 |
| 42 | 160 | 1 | 32 | 5 | 16 | 2 | 4 | 4 |
| 43 | 168 | 1 | 84 | 2 | 28 | 3 | 4 | 7 |
| 44 | 176 | 1 | 88 | 2 | 44 | 2 | 4 | 11 |
| 45 | 184 | 1 | 92 | 2 | 4 | 23 | 4 | 1 |
| 46 | 192 | 1 | 96 | 2 | 48 | 2 | 4 | 12 |
| 47 | 192 | 1 | 96 | 2 | 24 | 4 | 4 | 6 |
| 48 | 192 | 1 | 64 | 3 | 16 | 4 | 4 | 4 |
| 49 | 192 | 1 | 24 | 8 | 8 | 3 | 4 | 2 |
| 50 | 208 | 1 | 104 | 2 | 52 | 2 | 4 | 13 |
| 51 | 216 | 1 | 108 | 2 | 36 | 3 | 4 | 9 |
| 52 | 224 | 1 | 112 | 2 | 56 | 2 | 4 | 14 |
| 53 | 240 | 1 | 120 | 2 | 60 | 2 | 4 | 15 |
| 54 | 240 | 1 | 80 | 3 | 20 | 4 | 4 | 5 |
| 55 | 240 | 1 | 48 | 5 | 16 | 3 | 8 | 2 |
| 56 | 240 | 1 | 24 | 10 | 12 | 2 | 4 | 3 |
| 57 | 256 | 1 | 128 | 2 | 64 | 2 | 4 | 16 |
| 58 | 256 | 1 | 128 | 2 | 32 | 4 | 4 | 8 |
| 59 | 256 | 1 | 16 | 16 | 8 | 2 | 4 | 2 |
| 60 | 264 | 1 | 132 | 2 | 44 | 3 | 4 | 11 |
| 61 | 272 | 1 | 136 | 2 | 68 | 2 | 4 | 17 |
| 62 | 272 | 1 | 68 | 4 | 4 | 17 | 4 | 1 |
| 63 | 272 | 1 | 16 | 17 | 8 | 2 | 4 | 2 |

11. Basisstation nach Anspruch 10,
wobei der mindestens eine Prozessor (820) ferner so konfiguriert ist, dass er den Transceiver (810) so steuert, dass er durch Signalisierung einer höheren Schicht Offset-Informationen an das UE überträgt, wobei die Offset-Informationen auf einem gemeinsamen Ressourcenblock basieren, und
wobei das SRS auf der Grundlage der Bandbreite und eines Startpunkts für die Bandbreite empfangen wird, wobei der Startpunkt auf der Grundlage der Offset-Informationen identifiziert wird.

## Revendications

1. Procédé d'un équipement utilisateur, UE, dans un système de communication sans fil, le procédé comprenant :
transmettre, à une station de base, des informations sur la largeur de bande prise en charge par l'UE ;
recevoir, depuis la station de base, un premier paramètre et un deuxième paramètre associés à un signal de référence de sondage, SRS, par une signalisation de couche supérieure, le premier paramètre et le deuxième paramètre étant des paramètres spécifiques à l'UE ;
identifier une largeur de bande pour le SRS en fonction du premier paramètre et du deuxième paramètre ; et
transmettre, à la station de base, le SRS en fonction de la largeur de bande identifiée pour le SRS,
dans lequel le premier paramètre indique la largeur de bande SRS spécifique à l'UE, BSRS, et le deuxième paramètre indique une configuration de la largeur de bande SRS, CSRS,
dans lequel une première valeur, BSRS=1, BSRS=2, ou BSRS=3, du premier paramètre indique un premier ensemble de largeur de bande ne comprenant pas 272 blocs de ressources, RB, et une deuxième valeur, BSRS=0, du premier paramètre indique un deuxième ensemble de largeurs de bande comprenant 272 RB dans un tableau prédéterminé ,
dans lequel les valeurs correspondant à mSRS et n de (BSRS= n) sont choisies comme
valeurs qui peuvent être exprimées comme la multiplication de Nn+1 et (mSRS,n+1) de (BSRS= n+1)
et
dans lequel le premier ensemble de largeurs de bande ne comprend pas une partie du deuxième ensemble de largeurs de bande inférieure à 272 RB ,
dans lequel le tableau prédéterminé est :
| | BSRS = 0 | | BSRS = 1 | | BSRS = 2 | | BSRS = 3 | |
|---|---|---|---|---|---|---|---|---|
| CSRS | mSRS,0 | N0 | mSRS,1 | N1 | mSRS,2 | N2 | mSRS,3 | N3 |
| 0 | 4 | 1 | 4 | 1 | 4 | 1 | 4 | 1 |
| 1 | 8 | 1 | 4 | 2 | 4 | 1 | 4 | 1 |
| 2 | 12 | 1 | 4 | 3 | 4 | 1 | 4 | 1 |
| 3 | 16 | 1 | 4 | 4 | 4 | 1 | 4 | 1 |
| 4 | 16 | 1 | 8 | 2 | 4 | 2 | 4 | 1 |
| 5 | 20 | 1 | 4 | 5 | 4 | 1 | 4 | 1 |
| 6 | 24 | 1 | 4 | 6 | 4 | 1 | 4 | 1 |
| 7 | 24 | 1 | 12 | 2 | 4 | 3 | 4 | 1 |
| 8 | 28 | 1 | 4 | 7 | 4 | 1 | 4 | 1 |
| 9 | 32 | 1 | 16 | 2 | 8 | 2 | 4 | 2 |
| 10 | 36 | 1 | 12 | 3 | 4 | 3 | 4 | 1 |
| 11 | 40 | 1 | 20 | 2 | 4 | 5 | 4 | 1 |
| 12 | 48 | 1 | 16 | 3 | 8 | 2 | 4 | 2 |
| 13 | 48 | 1 | 24 | 2 | 12 | 2 | 4 | 3 |
| 14 | 52 | 1 | 4 | 13 | 4 | 1 | 4 | 1 |
| 15 | 56 | 1 | 28 | 2 | 4 | 7 | 4 | 1 |
| 16 | 60 | 1 | 20 | 3 | 4 | 5 | 4 | 1 |
| 17 | 64 | 1 | 32 | 2 | 16 | 2 | 4 | 4 |
| 18 | 72 | 1 | 24 | 3 | 12 | 2 | 4 | 3 |
| 19 | 72 | 1 | 36 | 2 | 12 | 3 | 4 | 3 |
| 20 | 76 | 1 | 4 | 19 | 4 | 1 | 4 | 1 |
| 21 | 80 | 1 | 40 | 2 | 20 | 2 | 4 | 5 |
| 22 | 88 | 1 | 44 | 2 | 4 | 11 | 4 | 1 |
| 23 | 96 | 1 | 32 | 3 | 16 | 2 | 4 | 4 |
| 24 | 96 | 1 | 48 | 2 | 24 | 2 | 4 | 6 |
| 25 | 104 | 1 | 52 | 2 | 4 | 13 | 4 | 1 |
| 26 | 112 | 1 | 56 | 2 | 28 | 2 | 4 | 7 |
| 27 | 120 | 1 | 60 | 2 | 20 | 3 | 4 | 5 |
| 28 | 120 | 1 | 40 | 3 | 8 | 5 | 4 | 2 |
| 29 | 120 | 1 | 24 | 5 | 12 | 2 | 4 | 3 |
| 30 | 128 | 1 | 64 | 2 | 32 | 2 | 4 | 8 |
| 31 | 128 | 1 | 64 | 2 | 16 | 4 | 4 | 4 |
| 32 | 128 | 1 | 16 | 8 | 8 | 2 | 4 | 2 |
| 33 | 132 | 1 | 44 | 3 | 4 | 11 | 4 | 1 |
| 34 | 136 | 1 | 68 | 2 | 4 | 17 | 4 | 1 |
| 35 | 144 | 1 | 72 | 2 | 36 | 2 | 4 | 9 |
| 36 | 144 | 1 | 48 | 3 | 24 | 2 | 12 | 2 |
| 37 | 144 | 1 | 48 | 3 | 16 | 3 | 4 | 4 |
| 38 | 144 | 1 | 16 | 9 | 8 | 2 | 4 | 2 |
| 39 | 152 | 1 | 76 | 2 | 4 | 19 | 4 | 1 |
| 40 | 160 | 1 | 80 | 2 | 40 | 2 | 4 | 10 |
| 41 | 160 | 1 | 80 | 2 | 20 | 4 | 4 | 5 |
| 42 | 160 | 1 | 32 | 5 | 16 | 2 | 4 | 4 |
| 43 | 168 | 1 | 84 | 2 | 28 | 3 | 4 | 7 |
| 44 | 176 | 1 | 88 | 2 | 44 | 2 | 4 | 11 |
| 45 | 184 | 1 | 92 | 2 | 4 | 23 | 4 | 1 |
| 46 | 192 | 1 | 96 | 2 | 48 | 2 | 4 | 12 |
| 47 | 192 | 1 | 96 | 2 | 24 | 4 | 4 | 6 |
| 48 | 192 | 1 | 64 | 3 | 16 | 4 | 4 | 4 |
| 49 | 192 | 1 | 24 | 8 | 8 | 3 | 4 | 2 |
| 50 | 208 | 1 | 104 | 2 | 52 | 2 | 4 | 13 |
| 51 | 216 | 1 | 108 | 2 | 36 | 3 | 4 | 9 |
| 52 | 224 | 1 | 112 | 2 | 56 | 2 | 4 | 14 |
| 53 | 240 | 1 | 120 | 2 | 60 | 2 | 4 | 15 |
| 54 | 240 | 1 | 80 | 3 | 20 | 4 | 4 | 5 |
| 55 | 240 | 1 | 48 | 5 | 16 | 3 | 8 | 2 |
| 56 | 240 | 1 | 24 | 10 | 12 | 2 | 4 | 3 |
| 57 | 256 | 1 | 128 | 2 | 64 | 2 | 4 | 16 |
| 58 | 256 | 1 | 128 | 2 | 32 | 4 | 4 | 8 |
| 59 | 256 | 1 | 16 | 16 | 8 | 2 | 4 | 2 |
| 60 | 264 | 1 | 132 | 2 | 44 | 3 | 4 | 11 |
| 61 | 272 | 1 | 136 | 2 | 68 | 2 | 4 | 17 |
| 62 | 272 | 1 | 68 | 4 | 4 | 17 | 4 | 1 |
| 63 | 272 | 1 | 16 | 17 | 8 | 2 | 4 | 2 |

2. Procédé de la revendication 1, comprenant en outre :
recevoir, depuis la station de base, des informations de décalage par une signalisation de couche supérieure, les informations de décalage étant basées sur un bloc de ressources commun ; et
identifier un point de départ pour la largeur de bande sur la base des informations de décalage,
dans lequel le SRS est transmis en fonction de la largeur de bande et du point de départ identifié.

3. Procédé de la revendication 1,
la largeur de bande du SRS comprenant jusqu'à 272 blocs de ressources, RB.

4. Procédé d'une station de base dans un système de communication sans fil, comprenant :
recevoir, de la part d'un équipement utilisateur, UE, des informations sur une largeur de bande prise en charge par l'UE ;
transmettre à l'UE un premier paramètre et un deuxième paramètre associés à un signal de référence de sondage, SRS, par une signalisation de couche supérieure, le premier paramètre et le deuxième paramètre étant des paramètres spécifiques à l'UE ; et
recevoir, depuis l'UE, le SRS sur la base d'une largeur de bande pour le SRS, la largeur de bande étant identifiée sur la base du premier paramètre et du deuxième paramètre,
le premier paramètre indique que la largeur de bande SRS spécifique à l'UE est un paramètre spécifique à l'UE, BSRS, et le deuxième paramètre indique une configuration de largeur de bande SRS, CSRS,
où une première valeur, BSRS=1, BSRS=2, ou BSRS=3, du premier paramètre indique un premier ensemble de largeurs de bande ne comprenant pas 272 blocs de ressources, RB, et une deuxième valeur, BSRS=0, du premier paramètre indique un deuxième ensemble de largeurs de bande comprenant 272 RB dans un tableau prédéterminé,
dans lequel les valeurs correspondant à mSRS et n de (BSRS= n) sont choisies comme
valeurs qui peuvent être exprimées comme la multiplication de Nn+1 et (mSRS,n+1) de (BSRS= n+1), et
dans lequel le premier ensemble de largeurs de bande ne comprend pas une partie du deuxième ensemble de largeurs de bande inférieure à 272 RB
dans lequel le tableau prédéterminé est :
| | BSRS = 0 | | BSRS = 1 | | BSRS = 2 | | BSRS = 3 | |
|---|---|---|---|---|---|---|---|---|
| CSRS | mSRS,0 | N0 | mSRS,1 | N1 | mSRS,2 | N2 | mSRS,3 | N3 |
| 0 | 4 | 1 | 4 | 1 | 4 | 1 | 4 | 1 |
| 1 | 8 | 1 | 4 | 2 | 4 | 1 | 4 | 1 |
| 2 | 12 | 1 | 4 | 3 | 4 | 1 | 4 | 1 |
| 3 | 16 | 1 | 4 | 4 | 4 | 1 | 4 | 1 |
| 4 | 16 | 1 | 8 | 2 | 4 | 2 | 4 | 1 |
| 5 | 20 | 1 | 4 | 5 | 4 | 1 | 4 | 1 |
| 6 | 24 | 1 | 4 | 6 | 4 | 1 | 4 | 1 |
| 7 | 24 | 1 | 12 | 2 | 4 | 3 | 4 | 1 |
| 8 | 28 | 1 | 4 | 7 | 4 | 1 | 4 | 1 |
| 9 | 32 | 1 | 16 | 2 | 8 | 2 | 4 | 2 |
| 10 | 36 | 1 | 12 | 3 | 4 | 3 | 4 | 1 |
| 11 | 40 | 1 | 20 | 2 | 4 | 5 | 4 | 1 |
| 12 | 48 | 1 | 16 | 3 | 8 | 2 | 4 | 2 |
| 13 | 48 | 1 | 24 | 2 | 12 | 2 | 4 | 3 |
| 14 | 52 | 1 | 4 | 13 | 4 | 1 | 4 | 1 |
| 15 | 56 | 1 | 28 | 2 | 4 | 7 | 4 | 1 |
| 16 | 60 | 1 | 20 | 3 | 4 | 5 | 4 | 1 |
| 17 | 64 | 1 | 32 | 2 | 16 | 2 | 4 | 4 |
| 18 | 72 | 1 | 24 | 3 | 12 | 2 | 4 | 3 |
| 19 | 72 | 1 | 36 | 2 | 12 | 3 | 4 | 3 |
| 20 | 76 | 1 | 4 | 19 | 4 | 1 | 4 | 1 |
| 21 | 80 | 1 | 40 | 2 | 20 | 2 | 4 | 5 |
| 22 | 88 | 1 | 44 | 2 | 4 | 11 | 4 | 1 |
| 23 | 96 | 1 | 32 | 3 | 16 | 2 | 4 | 4 |
| 24 | 96 | 1 | 48 | 2 | 24 | 2 | 4 | 6 |
| 25 | 104 | 1 | 52 | 2 | 4 | 13 | 4 | 1 |
| 26 | 112 | 1 | 56 | 2 | 28 | 2 | 4 | 7 |
| 27 | 120 | 1 | 60 | 2 | 20 | 3 | 4 | 5 |
| 28 | 120 | 1 | 40 | 3 | 8 | 5 | 4 | 2 |
| 29 | 120 | 1 | 24 | 5 | 12 | 2 | 4 | 3 |
| 30 | 128 | 1 | 64 | 2 | 32 | 2 | 4 | 8 |
| 31 | 128 | 1 | 64 | 2 | 16 | 4 | 4 | 4 |
| 32 | 128 | 1 | 16 | 8 | 8 | 2 | 4 | 2 |
| 33 | 132 | 1 | 44 | 3 | 4 | 11 | 4 | 1 |
| 34 | 136 | 1 | 68 | 2 | 4 | 17 | 4 | 1 |
| 35 | 144 | 1 | 72 | 2 | 36 | 2 | 4 | 9 |
| 36 | 144 | 1 | 48 | 3 | 24 | 2 | 12 | 2 |
| 37 | 144 | 1 | 48 | 3 | 16 | 3 | 4 | 4 |
| 38 | 144 | 1 | 16 | 9 | 8 | 2 | 4 | 2 |
| 39 | 152 | 1 | 76 | 2 | 4 | 19 | 4 | 1 |
| 40 | 160 | 1 | 80 | 2 | 40 | 2 | 4 | 10 |
| 41 | 160 | 1 | 80 | 2 | 20 | 4 | 4 | 5 |
| 42 | 160 | 1 | 32 | 5 | 16 | 2 | 4 | 4 |
| 43 | 168 | 1 | 84 | 2 | 28 | 3 | 4 | 7 |
| 44 | 176 | 1 | 88 | 2 | 44 | 2 | 4 | 11 |
| 45 | 184 | 1 | 92 | 2 | 4 | 23 | 4 | 1 |
| 46 | 192 | 1 | 96 | 2 | 48 | 2 | 4 | 12 |
| 47 | 192 | 1 | 96 | 2 | 24 | 4 | 4 | 6 |
| 48 | 192 | 1 | 64 | 3 | 16 | 4 | 4 | 4 |
| 49 | 192 | 1 | 24 | 8 | 8 | 3 | 4 | 2 |
| 50 | 208 | 1 | 104 | 2 | 52 | 2 | 4 | 13 |
| 51 | 216 | 1 | 108 | 2 | 36 | 3 | 4 | 9 |
| 52 | 224 | 1 | 112 | 2 | 56 | 2 | 4 | 14 |
| 53 | 240 | 1 | 120 | 2 | 60 | 2 | 4 | 15 |
| 54 | 240 | 1 | 80 | 3 | 20 | 4 | 4 | 5 |
| 55 | 240 | 1 | 48 | 5 | 16 | 3 | 8 | 2 |
| 56 | 240 | 1 | 24 | 10 | 12 | 2 | 4 | 3 |
| 57 | 256 | 1 | 128 | 2 | 64 | 2 | 4 | 16 |
| 58 | 256 | 1 | 128 | 2 | 32 | 4 | 4 | 8 |
| 59 | 256 | 1 | 16 | 16 | 8 | 2 | 4 | 2 |
| 60 | 264 | 1 | 132 | 2 | 44 | 3 | 4 | 11 |
| 61 | 272 | 1 | 136 | 2 | 68 | 2 | 4 | 17 |
| 62 | 272 | 1 | 68 | 4 | 4 | 17 | 4 | 1 |
| 63 | 272 | 1 | 16 | 17 | 8 | 2 | 4 | 2 |

5. Procédé de la revendication 4, comprenant en outre :
transmettre à l'UE des informations de décalage par une signalisation de couche supérieure, les informations de décalage étant basées sur un bloc de ressources commun,
dans lequel le SRS est reçu en fonction de la largeur de bande et d'un point de départ pour la largeur de bande, le point de départ étant identifié sur la base des informations de décalage.

6. Procédé de la revendication 4,
la largeur de bande du SRS comprenant jusqu'à 272 blocs de ressources (RB).

7. Équipement utilisateur, UE, utilisable dans un système de communication sans fil, l'UE comprenant :
un émetteur-récepteur (910) ; et
au moins un processeur (920) connecté de manière opérationnelle à l'émetteur-récepteur (910) et configuré pour :
commander l'émetteur-récepteur (910) pour qu'il transmette à une station de base des informations sur la largeur de bande supportée par l'UE,
commander l'émetteur-récepteur (910) pour qu'il reçoive, depuis la station de base, un premier paramètre et un deuxième paramètre associés à un signal de référence de sondage, SRS, par une signalisation de couche supérieure, le premier paramètre et le deuxième paramètre comprenant des paramètres spécifiques à l'UE,
identifier une largeur de bande pour le SRS en fonction du premier paramètre et du deuxième paramètre, et
commander l'émetteur-récepteur (910) pour qu'il transmette, à la station de base, le SRS en fonction de la largeur de bande identifiée pour le SRS,
dans lequel le premier paramètre indique que la largeur de bande SRS spécifique à l'UE est un paramètre spécifique à l'UE, BSRS, et le deuxième paramètre indique une configuration de largeur de bande SRS, CSRS,
où une première valeur, BSRS=1, BSRS=2, ou BSRS=3, du premier paramètre indique un premier ensemble de largeurs de bande ne comprenant pas 272 blocs de ressources, RB, et une deuxième valeur, BSRS=0, du premier paramètre indique un deuxième ensemble de largeurs de bande comprenant 272 RB dans un tableau prédéterminé,
dans lequel les valeurs correspondant à mSRS et n de (BSRS= n) sont choisies comme valeurs qui peuvent être exprimées comme la multiplication de Nn+1 et (mSRS,n+1) de (BSRS= n+1), et
dans lequel le premier ensemble de largeurs de bande ne comprend pas une partie du deuxième ensemble de largeurs de bande inférieure à 272 RB,
dans lequel le tableau prédéterminé est :
| | BSRS = 0 | | BSRS = 1 | | BSRS = 2 | | BSRS = 3 | |
|---|---|---|---|---|---|---|---|---|
| CSRS | mSRS,0 | N0 | mSRS,1 | N1 | mSRS,2 | N2 | mSRS,3 | N3 |
| 0 | 4 | 1 | 4 | 1 | 4 | 1 | 4 | 1 |
| 1 | 8 | 1 | 4 | 2 | 4 | 1 | 4 | 1 |
| 2 | 12 | 1 | 4 | 3 | 4 | 1 | 4 | 1 |
| 3 | 16 | 1 | 4 | 4 | 4 | 1 | 4 | 1 |
| 4 | 16 | 1 | 8 | 2 | 4 | 2 | 4 | 1 |
| 5 | 20 | 1 | 4 | 5 | 4 | 1 | 4 | 1 |
| 6 | 24 | 1 | 4 | 6 | 4 | 1 | 4 | 1 |
| 7 | 24 | 1 | 12 | 2 | 4 | 3 | 4 | 1 |
| 8 | 28 | 1 | 4 | 7 | 4 | 1 | 4 | 1 |
| 9 | 32 | 1 | 16 | 2 | 8 | 2 | 4 | 2 |
| 10 | 36 | 1 | 12 | 3 | 4 | 3 | 4 | 1 |
| 11 | 40 | 1 | 20 | 2 | 4 | 5 | 4 | 1 |
| 12 | 48 | 1 | 16 | 3 | 8 | 2 | 4 | 2 |
| 13 | 48 | 1 | 24 | 2 | 12 | 2 | 4 | 3 |
| 14 | 52 | 1 | 4 | 13 | 4 | 1 | 4 | 1 |
| 15 | 56 | 1 | 28 | 2 | 4 | 7 | 4 | 1 |
| 16 | 60 | 1 | 20 | 3 | 4 | 5 | 4 | 1 |
| 17 | 64 | 1 | 32 | 2 | 16 | 2 | 4 | 4 |
| 18 | 72 | 1 | 24 | 3 | 12 | 2 | 4 | 3 |
| 19 | 72 | 1 | 36 | 2 | 12 | 3 | 4 | 3 |
| 20 | 76 | 1 | 4 | 19 | 4 | 1 | 4 | 1 |
| 21 | 80 | 1 | 40 | 2 | 20 | 2 | 4 | 5 |
| 22 | 88 | 1 | 44 | 2 | 4 | 11 | 4 | 1 |
| 23 | 96 | 1 | 32 | 3 | 16 | 2 | 4 | 4 |
| 24 | 96 | 1 | 48 | 2 | 24 | 2 | 4 | 6 |
| 25 | 104 | 1 | 52 | 2 | 4 | 13 | 4 | 1 |
| 26 | 112 | 1 | 56 | 2 | 28 | 2 | 4 | 7 |
| 27 | 120 | 1 | 60 | 2 | 20 | 3 | 4 | 5 |
| 28 | 120 | 1 | 40 | 3 | 8 | 5 | 4 | 2 |
| 29 | 120 | 1 | 24 | 5 | 12 | 2 | 4 | 3 |
| 30 | 128 | 1 | 64 | 2 | 32 | 2 | 4 | 8 |
| 31 | 128 | 1 | 64 | 2 | 16 | 4 | 4 | 4 |
| 32 | 128 | 1 | 16 | 8 | 8 | 2 | 4 | 2 |
| 33 | 132 | 1 | 44 | 3 | 4 | 11 | 4 | 1 |
| 34 | 136 | 1 | 68 | 2 | 4 | 17 | 4 | 1 |
| 35 | 144 | 1 | 72 | 2 | 36 | 2 | 4 | 9 |
| 36 | 144 | 1 | 48 | 3 | 24 | 2 | 12 | 2 |
| 37 | 144 | 1 | 48 | 3 | 16 | 3 | 4 | 4 |
| 38 | 144 | 1 | 16 | 9 | 8 | 2 | 4 | 2 |
| 39 | 152 | 1 | 76 | 2 | 4 | 19 | 4 | 1 |
| 40 | 160 | 1 | 80 | 2 | 40 | 2 | 4 | 10 |
| 41 | 160 | 1 | 80 | 2 | 20 | 4 | 4 | 5 |
| 42 | 160 | 1 | 32 | 5 | 16 | 2 | 4 | 4 |
| 43 | 168 | 1 | 84 | 2 | 28 | 3 | 4 | 7 |
| 44 | 176 | 1 | 88 | 2 | 44 | 2 | 4 | 11 |
| 45 | 184 | 1 | 92 | 2 | 4 | 23 | 4 | 1 |
| 46 | 192 | 1 | 96 | 2 | 48 | 2 | 4 | 12 |
| 47 | 192 | 1 | 96 | 2 | 24 | 4 | 4 | 6 |
| 48 | 192 | 1 | 64 | 3 | 16 | 4 | 4 | 4 |
| 49 | 192 | 1 | 24 | 8 | 8 | 3 | 4 | 2 |
| 50 | 208 | 1 | 104 | 2 | 52 | 2 | 4 | 13 |
| 51 | 216 | 1 | 108 | 2 | 36 | 3 | 4 | 9 |
| 52 | 224 | 1 | 112 | 2 | 56 | 2 | 4 | 14 |
| 53 | 240 | 1 | 120 | 2 | 60 | 2 | 4 | 15 |
| 54 | 240 | 1 | 80 | 3 | 20 | 4 | 4 | 5 |
| 55 | 240 | 1 | 48 | 5 | 16 | 3 | 8 | 2 |
| 56 | 240 | 1 | 24 | 10 | 12 | 2 | 4 | 3 |
| 57 | 256 | 1 | 128 | 2 | 64 | 2 | 4 | 16 |
| 58 | 256 | 1 | 128 | 2 | 32 | 4 | 4 | 8 |
| 59 | 256 | 1 | 16 | 16 | 8 | 2 | 4 | 2 |
| 60 | 264 | 1 | 132 | 2 | 44 | 3 | 4 | 11 |
| 61 | 272 | 1 | 136 | 2 | 68 | 2 | 4 | 17 |
| 62 | 272 | 1 | 68 | 4 | 4 | 17 | 4 | 1 |
| 63 | 272 | 1 | 16 | 17 | 8 | 2 | 4 | 2 |

8. UE de la revendication 7,
dans lequel l'au moins un processeur (920) est en outre configuré pour :
commander l'émetteur-récepteur pour qu'il reçoive, depuis la station de base, des informations de décalage par une signalisation de couche supérieure, les informations de décalage étant basées sur un bloc de ressources commun, et
identifier un point de départ pour la largeur de bande sur la base des informations de décalage, et
dans lequel le SRS est transmis en fonction de la largeur de bande et du point de départ identifié.

9. UE de la revendication 7,
la largeur de bande du SRS comprenant jusqu'à 272 blocs de ressources (RB).

10. Station de base utilisable dans un système de communication sans fil, la station de base comprenant :
un émetteur-récepteur (810) ; et
au moins un processeur (820) connecté de manière opérationnelle à l'émetteur-récepteur (810) et configuré pour commander l'émetteur-récepteur (810) pour :
recevoir, depuis un équipement utilisateur, UE, des informations sur une largeur de bande prise en charge par l'UE,
transmettre à l'UE un premier paramètre et un deuxième paramètre par une signalisation de couche supérieure, et
recevoir, depuis l'UE, un signal de référence de sondage, SRS, basé sur une largeur de bande pour le SRS, la largeur de bande étant identifiée sur la base du premier paramètre et du deuxième paramètre, le premier paramètre et le deuxième paramètre comprenant des paramètres spécifiques à l'UE,
dans lequel le premier paramètre indique que la largeur de bande SRS spécifique à l'UE est un paramètre spécifique à l'UE, BSRS, et le deuxième paramètre indique une configuration de largeur de bande SRS, CSRS,
où une première valeur, BSRS=1, BSRS=2, ou BSRS=3, du premier paramètre indique un premier ensemble de largeurs de bande ne comprenant pas 272 blocs de ressources, RB, et une deuxième valeur, BSRS=0, du premier paramètre indique un deuxième ensemble de largeurs de bande comprenant 272 RB dans un tableau prédéterminé,
dans lequel les valeurs correspondant à mSRS et n de (BSRS= n) sont choisies comme valeurs qui peuvent être exprimées comme la multiplication de Nn+1 et (mSRS,n+1) de (BSRS= n+1), et
dans lequel le premier ensemble de largeurs de bande ne comprend pas une partie du deuxième ensemble de largeurs de bande inférieure à 272 RB,
dans lequel le tableau prédéterminé est :
| | BSRS = 0 | | BSRS = 1 | | BSRS = 2 | | BSRS = 3 | |
|---|---|---|---|---|---|---|---|---|
| CSRS | mSRS,0 | N0 | mSRS,1 | N1 | mSRS,2 | N2 | mSRS,3 | N3 |
| 0 | 4 | 1 | 4 | 1 | 4 | 1 | 4 | 1 |
| 1 | 8 | 1 | 4 | 2 | 4 | 1 | 4 | 1 |
| 2 | 12 | 1 | 4 | 3 | 4 | 1 | 4 | 1 |
| 3 | 16 | 1 | 4 | 4 | 4 | 1 | 4 | 1 |
| 4 | 16 | 1 | 8 | 2 | 4 | 2 | 4 | 1 |
| 5 | 20 | 1 | 4 | 5 | 4 | 1 | 4 | 1 |
| 6 | 24 | 1 | 4 | 6 | 4 | 1 | 4 | 1 |
| 7 | 24 | 1 | 12 | 2 | 4 | 3 | 4 | 1 |
| 8 | 28 | 1 | 4 | 7 | 4 | 1 | 4 | 1 |
| 9 | 32 | 1 | 16 | 2 | 8 | 2 | 4 | 2 |
| 10 | 36 | 1 | 12 | 3 | 4 | 3 | 4 | 1 |
| 11 | 40 | 1 | 20 | 2 | 4 | 5 | 4 | 1 |
| 12 | 48 | 1 | 16 | 3 | 8 | 2 | 4 | 2 |
| 13 | 48 | 1 | 24 | 2 | 12 | 2 | 4 | 3 |
| 14 | 52 | 1 | 4 | 13 | 4 | 1 | 4 | 1 |
| 15 | 56 | 1 | 28 | 2 | 4 | 7 | 4 | 1 |
| 16 | 60 | 1 | 20 | 3 | 4 | 5 | 4 | 1 |
| 17 | 64 | 1 | 32 | 2 | 16 | 2 | 4 | 4 |
| 18 | 72 | 1 | 24 | 3 | 12 | 2 | 4 | 3 |
| 19 | 72 | 1 | 36 | 2 | 12 | 3 | 4 | 3 |
| 20 | 76 | 1 | 4 | 19 | 4 | 1 | 4 | 1 |
| 21 | 80 | 1 | 40 | 2 | 20 | 2 | 4 | 5 |
| 22 | 88 | 1 | 44 | 2 | 4 | 11 | 4 | 1 |
| 23 | 96 | 1 | 32 | 3 | 16 | 2 | 4 | 4 |
| 24 | 96 | 1 | 48 | 2 | 24 | 2 | 4 | 6 |
| 25 | 104 | 1 | 52 | 2 | 4 | 13 | 4 | 1 |
| 26 | 112 | 1 | 56 | 2 | 28 | 2 | 4 | 7 |
| 27 | 120 | 1 | 60 | 2 | 20 | 3 | 4 | 5 |
| 28 | 120 | 1 | 40 | 3 | 8 | 5 | 4 | 2 |
| 29 | 120 | 1 | 24 | 5 | 12 | 2 | 4 | 3 |
| 30 | 128 | 1 | 64 | 2 | 32 | 2 | 4 | 8 |
| 31 | 128 | 1 | 64 | 2 | 16 | 4 | 4 | 4 |
| 32 | 128 | 1 | 16 | 8 | 8 | 2 | 4 | 2 |
| 33 | 132 | 1 | 44 | 3 | 4 | 11 | 4 | 1 |
| 34 | 136 | 1 | 68 | 2 | 4 | 17 | 4 | 1 |
| 35 | 144 | 1 | 72 | 2 | 36 | 2 | 4 | 9 |
| 36 | 144 | 1 | 48 | 3 | 24 | 2 | 12 | 2 |
| 37 | 144 | 1 | 48 | 3 | 16 | 3 | 4 | 4 |
| 38 | 144 | 1 | 16 | 9 | 8 | 2 | 4 | 2 |
| 39 | 152 | 1 | 76 | 2 | 4 | 19 | 4 | 1 |
| 40 | 160 | 1 | 80 | 2 | 40 | 2 | 4 | 10 |
| 41 | 160 | 1 | 80 | 2 | 20 | 4 | 4 | 5 |
| 42 | 160 | 1 | 32 | 5 | 16 | 2 | 4 | 4 |
| 43 | 168 | 1 | 84 | 2 | 28 | 3 | 4 | 7 |
| 44 | 176 | 1 | 88 | 2 | 44 | 2 | 4 | 11 |
| 45 | 184 | 1 | 92 | 2 | 4 | 23 | 4 | 1 |
| 46 | 192 | 1 | 96 | 2 | 48 | 2 | 4 | 12 |
| 47 | 192 | 1 | 96 | 2 | 24 | 4 | 4 | 6 |
| 48 | 192 | 1 | 64 | 3 | 16 | 4 | 4 | 4 |
| 49 | 192 | 1 | 24 | 8 | 8 | 3 | 4 | 2 |
| 50 | 208 | 1 | 104 | 2 | 52 | 2 | 4 | 13 |
| 51 | 216 | 1 | 108 | 2 | 36 | 3 | 4 | 9 |
| 52 | 224 | 1 | 112 | 2 | 56 | 2 | 4 | 14 |
| 53 | 240 | 1 | 120 | 2 | 60 | 2 | 4 | 15 |
| 54 | 240 | 1 | 80 | 3 | 20 | 4 | 4 | 5 |
| 55 | 240 | 1 | 48 | 5 | 16 | 3 | 8 | 2 |
| 56 | 240 | 1 | 24 | 10 | 12 | 2 | 4 | 3 |
| 57 | 256 | 1 | 128 | 2 | 64 | 2 | 4 | 16 |
| 58 | 256 | 1 | 128 | 2 | 32 | 4 | 4 | 8 |
| 59 | 256 | 1 | 16 | 16 | 8 | 2 | 4 | 2 |
| 60 | 264 | 1 | 132 | 2 | 44 | 3 | 4 | 11 |
| 61 | 272 | 1 | 136 | 2 | 68 | 2 | 4 | 17 |
| 62 | 272 | 1 | 68 | 4 | 4 | 17 | 4 | 1 |
| 63 | 272 | 1 | 16 | 17 | 8 | 2 | 4 | 2 |

11. Station de base de la revendication 10,
dans lequel l'au moins un processeur (820) est en outre configuré pour commander l'émetteur-récepteur (810) afin de transmettre, à l'UE, des informations de décalage par une signalisation de couche supérieure, les informations de décalage étant basées sur un bloc de ressources commun, et
le SRS est reçu en fonction de la largeur de bande et d'un point de départ pour la largeur de bande, le point de départ étant identifié sur la base des informations de décalage.
